(19) **Europäisches Patentamt European Patent Office Office européen des brevets**

(11) **EP 2 177 573 A1**

(12) **EUROPEAN PATENT APPLICATION**

(43) Date of publication:
21.04.2010 Bulletin 2010/16

(51) Int Cl.:
*C09D 1/00* (2006.01)

(21) Application number: 10150356.3

(22) Date of filing: 27.06.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL

(30) Priority: 28.06.2006 GB 0612803

(62) Document number(s) of the earlier application(s) in accordance with Art. 76 EPC:
07766139.5 / 2 032 662

(71) Applicant: Lucite International UK Limited
Southampton
Hampshire SO14 3BP (GB)

(72) Inventors:
• Fraser, Ian
Redcar, TS10 4RF (GB)
• Kirtley, Neil
Redcar, TS10 4RF (GB)
• Robinson, Ian
Redcar, TS10 4RF (GB)

(74) Representative: Smithson, Robert Alan
Appleyard Lees
15 Clare Road
Halifax, Yorkshire HX1 2HY (GB)

Remarks:
This application was filed on 08-01-2010 as a divisional application to the application mentioned under INID code 62.

(54) **Polymeric composition**

(57) Use of particles comprising an inorganic oxide having a weight average particle size of less than or equal to 400 nm for reducing melt viscosity in a polymeric composition, the polymeric composition comprising a polymer matrix derived from one or more polymerisable monomers, wherein said polymeric composition is obtainable by polymerising a polymerisable mixture comprising said one or more polymerisable monomers of the polymer matrix in the presence of said particles and a dispersing agent comprising an ethylenically unsaturated compound.

Figure 4

EP 2 177 573 A1

## Description

The present invention relates to improvements relating to polymeric compositions. In particular, the polymeric composition typically exhibits desirable rheological behaviour.

Polymeric materials are used in a variety of applications, for example buildings, including glazing and siding, automotive products, such as lights, instrument dials and panels, medical diagnostic devices, lighting applications such as light diffusers, signs, bath/sanitary ware, because of their toughness, weatherability, appearance and stability characteristics. They may be used as a capstock material to provide a coating layer over a substrate material and hence impart the advantageous properties of the polymeric material to the underlying substrate material. Typically, it is desirable that the polymeric material retains its physical and aesthetic characteristics during use, in particular, it is desirable the polymeric material is resistant to chemicals, it does not weather and it does not craze following exposure to solvents, paints, thinners and cleaners typically used in industrial and household environments.

Polymeric compositions may be formed by a variety of methods. For example, they may be formed by a bulk polymerisation technique where the polymerisable monomers are polymerised in the absence of a secondary medium such as a solvent. Such methods include a casting process and bag polymerisation techniques. Alternatively, a polymeric composition may be formed by polymerising the polymerisable monomers in the presence of a solvent (e.g. an organic solvent) or water. Such methods are well known to those skilled in the art and include suspension, emulsion and solution polymerisation techniques.

Typically, high molecular weight polymeric compositions such as those formed by a casting process (typical molecular weight of up to 3 million Daltons) or polymeric compositions, which essentially have an infinite molecular weight (e.g. crosslinked polymeric compositions), typically exhibit appreciable resistance to chemicals, they exhibit desirable craze resistance properties and are relatively resistant to sudden changes and repeated changes in temperature. The polymeric materials may also be thermoformed, where the material is heated and shaped into an article. Conveniently, these polymeric materials typically possess desirable physical and aesthetic properties so they may be used in a variety of applications i.e. construction, lighting, bath/sanitary ware. Although these high molecular weight polymeric materials may exhibit appreciable resistance to chemicals and desirable craze resistance, upon prolonged exposure to chemicals they may swell following absorption of the chemicals and exhibit a gel-like consistency and/or partially or fully dissolve. Moreover, although high molecular weight polymeric materials may be thermoformed and shaped into articles for various applications, typically it is not possible to melt process these materials. Melt processing involves melting the polymeric material so that it flows and processing the resulting flowable melt (e.g. injection moulding or extrusion); whereas thermoforming typically involves heating and shaping the polymeric material without forming a flowable melt. Suitable melt processing techniques include extrusion, co-extrusion, blow moulding and injection moulding.

Melt processing involves melting a preformed polymer to form a flowable melt. The molten flowable polymer may be formed into sheets and subsequently shaped by thermoforming or the molten polymer may be shaped directly into articles, for example, by injection or blow moulding techniques. In contrast, forming an article from a non-melt processable polymer (i.e. a cast polymeric material) initially involves forming the polymer from a polymerisable matrix; the polymer which is typically in the form of a sheet may be subsequently shaped by thermoforming.

Typically, if a polymer is melt processable then this provides advantages in terms of efficiency, cost and flexibility. Typically it is cheaper to produce an article by melt processing techniques rather than from a non-melt processable polymeric material. Conveniently, it is possible to produce articles having different characteristics and properties from a single batch of a polymer using melt processing techniques. For example, the grade of the polymer may be changed by mixing additives, such as colorants and fillers, with the polymer and then melt processing the resulting mixture; alternatively the additives may be mixed with the molten polymer. In other words the polymer grade may be altered without manufacturing a separate batch of the polymer. In contrast, in order to form articles having different characteristics and properties from a non-melt processable polymeric material it is necessary to form separate batches of the polymeric material, as any additives are included in the polymerisable mixture prior to forming the polymeric material. Conveniently, melt processing represents a continuous process where a single batch of a polymer may be employed and modified when necessary to form articles having different characteristics and properties. Additionally, forming articles from non-melt processable polymeric materials typically requires the production and manipulation of large solid sheets of material; whereas melt processing techniques produce a molten flowable polymeric material which may be shaped directly, for example using injection moulding techniques.

Typically, polymers which are melt processable have a lower molecular weight than non-melt processable polymers. Melt processable polymers typically have a molecular weight of less than 200,000 Daltons and may be formed by suspension, emulsion, solution and bag polymerisation techniques. Although melt processable polymers typically offer advantages in processing techniques compared to non-melt processable polymers, typically melt processable polymers and articles formed therefrom exhibit inferior resistance to chemicals, inferior weatherability and inferior craze resistance compared to the higher molecular weight non-melt processable polymers.

Suitably, it is desirable to provide a polymeric composition with improved resistance to chemicals, improved weatherability and improved solvent craze. Additionally, or alternatively, it is desirable to provide a melt processable polymeric composition having improved resistance to chemicals, improved weatherability and improved solvent craze. The present invention seeks to provide such polymeric compositions.

Thus according to a first aspect, the present invention provides a polymeric composition comprising a polymer matrix derived from one or more polymerisable monomers and including particles comprising an inorganic oxide and having a weight average particle size of less than or equal to 400 nm contained therein, wherein said polymeric composition is obtainable by polymerising a polymerisable mixture comprising said one or more polymerisable monomers of the polymer matrix in the presence of said particles and a dispersing agent comprising an ethylenically unsaturated compound.

Such a polymeric composition may be referred to as the polymeric composition of the present invention.

Unexpectedly, it has been found that a polymeric composition formed by polymerising one or more polymerisable monomers in the presence of a dispersing agent comprising an ethylenically unsaturated compound and inorganic oxide particles having a mean particle size of less than or equal to 400 nm typically exhibits improved chemical resistance compared with a comparable polymeric composition not including the inorganic oxide particles and/or the dispersing agent. Additionally, or alternatively, the polymeric composition of the present invention typically exhibits a significantly different melt rheology than a comparable composition not including the inorganic oxide particles. In particular, the shear viscosity ($\eta$) of the composition of the present invention typically decreases more rapidly than the shear viscosity of a comparable composition not including the inorganic oxide particles when measured over a defined range of increasing shear rate and under identical conditions (i.e. identical applied shear stress and identical temperature), in particular over the higher shear rate range used in standard melt processing techniques e.g. $10^2 s^{-1}$ to $10^5 s^{-1}$. In other words, the composition of the present invention typically exhibits an increased rate of shear thinning compared to a comparable composition not including the inorganic oxide particles. Additionally, all other factors being equal, the polymeric composition of the present invention may exhibit a lower viscous modulus (G") at a specific shear rate, in particular the higher shear rate range used in standard melt processing techniques e.g. $10^2 s^{-1}$ to $10^5 s^{-1}$, than a comparable composition not including the inorganic oxide particles. Conveniently, the composition of the present invention may be melt processed more readily and more efficiently than a comparable composition not including the inorganic oxide particles.

Such a finding is quite unexpected as the increased chemical resistance of the polymeric composition of the present invention suggests that the polymeric composition has a higher molecular weight than a comparable composition not including the inorganic oxide particles. However, as the shear viscosity of a polymer and the viscous modulus (G") typically increases with molecular weight, one would expect the polymeric composition of the present invention to exhibit a decreased rate of shear thinning and a higher viscous modulus (G") at a particular shear rate, for example the higher shear rate range used in standard melt processing techniques, than that of a comparable composition not including the inorganic oxide particles. However, the opposite effect appears to occur for the polymeric compositions of the present invention. Conveniently, the polymeric composition of the present invention may not only exhibit improved resistance to chemicals but also it may be processed more readily and efficiently using standard melt processing techniques.

Although only theory, it is possible the presence of the inorganic oxide particles and the dispersing agent weakly interact with the polymer chains of the polymer matrix thereby essentially increasing the molecular weight of the polymer matrix in the solid state. However, when the polymeric composition is heated and/or subjected to pressure the interactive forces between the polymer chains of the polymer matrix and the inorganic oxide particles may break, and the molecular weight of the polymeric matrix decreases.

Additionally, and completely unexpected, the improved chemical resistance of the polymeric composition of the present invention is typically retained after the composition has been melt processed and then solidified. Conveniently, the polymeric composition of the present invention may not only be melt-processed more readily than a comparable composition not including the inorganic oxide particles, but also the resulting solidified melt of the polymeric composition of the present invention typically possesses improved chemical resistance. Conveniently, the polymeric composition of the present invention offers advantages as it may be processed using melt processing techniques to form articles having improved chemical resistance.

Furthermore, the polymeric composition of the present invention typically has a similar or improved thermal stability as a comparable composition not including the inorganic oxide particles and the dispersing agent. Conveniently, the polymeric composition of the present invention is suitable for use in moderate and high temperature applications. The polymeric composition of the present invention also typically exhibits improved flame retardancy compared with a comparable composition not including the inorganic oxide particles.

Suitably, the dispersing agent includes an ethylenically unsaturated compound, namely a compound which includes one or more ethylenically unsaturated bonds i.e. carbon carbon double bonds. Suitable dispersing agents include styrene and derivatives thereof (e.g. $\alpha$-methyl styrene), vinyl acetate and derivatives thereof, vinyl halides (e.g. vinyl bromide and vinyl chloride) and derivatives thereof, vinylidene halides (e.g. vinylidene chloride) and derivatives thereof, and esters of acrylic acid or an ester of an alkacrylic acid. Preferably, the dispersing agent comprises styrene and derivatives thereof, an ester of acrylic acid or an ester of an alkacrylic acid. Most preferably, the dispersing agent comprises an ester of acrylic acid or an ester of an alkacrylic acid.

Preferably, the dispersing agent as defined herein is totally miscible with the polymerisable mixture comprising said one or more polymerisable monomers.

Preferably, the dispersing agent as defined herein is hydrophobic i.e. the dispersing agent does not include any free polar functional groups, such as hydroxyl or amino functional groups.

Suitably, the dispersing agent comprising an ester of acrylic acid or an ester of alkacrylic acid may include one or more (alk)acrylate groups per molecule. As used herein the term (alk)acrylate refers to the corresponding ester formed from acrylic acid or alkacrylic acid.

Suitable esters of acrylic acid or alkacrylic acid which include only one (alk)acrylate group per molecule include lower alkyl (alk)acrylates, lower aryl (alk)acrylates and lower arylalkylenyl (alk)acrylates. As used herein the term "lower alkyl (alk)acrylate" refers to the corresponding alkyl ester of acrylic acid or alkyl ester of alkacrylic acid. In other words, the term "lower alkyl (alk)acrylate" refers to either a lower alkyl acrylate or a lower alkyl alkacrylate. Similarly, the term "lower aryl (alk)acrylate" refers to the corresponding aryl ester of acrylic acid or aryl ester of alkacrylic acid and the term "lower arylalkylenyl (alk)acrylate" refers to the corresponding arylalkylenyl ester of acrylic acid or alkacrylic acid.

By the term "lower alkyl" as used herein we mean a $C_1$ to $C_{22}$ alkyl group and includes methyl, ethyl, propyl, butyl, pentyl, hexyl, heptyl, octyl, nonyl, decyl, isodecyl, undecyl, dodecyl, tridecyl, tetradecyl, pentadecyl, hexadecyl, heptadecyl, octadecyl, nonadecyl, eicosyl, behenyl and isomers thereof, including stereoisomers, structural isomers and geometric isomers. Unless otherwise specified, lower alkyl groups may, when there are sufficient number of carbon atoms, be linear or branched, acyclic or part cyclic/acyclic, and or be substituted or terminated with one or more substituents selected from amino, hydroxyl, alkoxy or halo, and/or be interrupted by one or more oxygen or nitrogen atoms.

Preferably, the lower alkyl (alk)acrylate comprises a lower alkyl ($C_1$-$C_{10}$ alk)acrylate. Examples of $C_1$-$C_{10}$ alk groups include methyl, ethyl, propyl, butyl, pentyl, hexyl and isomers thereof, including stereoisomers, structural and geometric isomers. Preferably, the $C_1$-$C_{10}$ alk group represents a $C_1$-$C_6$ alk group, more preferably a $C_1$-$C_4$ alk group as defined above. Most preferably, the preferred alk group is methyl.

Suitably, preferred esters of acrylic acid or alkacrylic acid including a single (alk)acrylate group per molecule include lower alkyl (meth)acrylates, lower aryl (meth)acrylates and lower arylalkylenyl (meth)acrylates.

Examples of suitable lower alkyl (meth)acrylates include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, 2-ethyl hexyl (meth)acrylate, octyl (meth)acrylate, dodecyl (meth)acrylate, cyclohexyl (meth)acrylate, isobornyl (meth)acrylate, dicyclopentenyl (meth)acrylate, hydroxyethyl (meth)acrylate, chloroethyl (meth)acrylate, hydroxypropyl (meth)acrylate, hydroxybutyl (meth)acrylate, glycidyl (meth)acrylate, dialkyl amino alkyl (meth)acrylates, such as dimethylaminoethyl (meth)acrylate, diethylaminoethyl (meth)acrylate, dimethylaminopropyl (meth)acrylate, diethyl aminopropyl (meth)acrylate and tert-butylaminoethyl (meth)acrylate. Preferably, the lower alkyl (meth)acrylate comprises a $C_1$ to $C_{12}$ alkyl (meth)acrylate as defined herein, particularly a $C_1$ to $C_{12}$ alkyl (meth)acrylate wherein the alkyl group consists of hydrogen and carbon atoms only.

By the term "lower aryl" as used herein we mean six to ten membered carbocyclic aromatic groups, such as phenyl and naphthyl, which groups are optionally substituted with one or more substituents, such as halo, hydroxyl, alkoxy, and lower alkyl, and which groups optionally include one or more heteroatoms selected from nitrogen, oxygen and sulfur in the aromatic ring.

Preferably, the lower aryl (alk)acrylate comprises a $C_6$ to $C_{10}$ aryl ($C_1$ to $C_{10}$ alk)acrylate. Preferably, the $C_1$-$C_{10}$ alk group of the lower aryl (alk)acrylate is as defined hereinbefore in respect of the lower alkyl (alk)acrylate i.e. lower aryl (meth)acrylates are preferred. Preferred $C_6$ to $C_{10}$ aryl groups include phenyl and naphthyl, especially unsubstituted phenyl and unsubstituted naphthyl groups. Suitably, a highly preferred lower aryl (alk)acrylate includes phenyl (meth) acrylate.

By the term "lower arylalkylenyl" as used herein we mean a lower aryl group as defined herein which includes a lower alkylene group (e.g. $(CH_2)_n$ where n is 1 to 6). Preferred lower arylalkylenyl (alk)acrylates include benzyl (meth) acrylate.

Suitable esters of acrylic acid or alkacrylic acid which include more than one (alk)acrylate group per molecule include at least two or more polymerisable carbon-carbon double bonds per molecule. Examples of such esters include lower alkyl di(alk)acrylates, lower alkyl tri(alk)acrylates, lower alkyl tetra(alk)acrylates and lower alkyl hexa(alk)acrylates. Suitably, the term "lower alkyl" and "alk" have the same meanings as used in respect of the lower alkyl (alk)acrylates as defined hereinbefore.

Examples of suitable bifunctional dispersing agents include: ethylene glycol di(meth)acrylate, hexane diol di (meth)acrylate, propylene glycol di(meth)acrylate, butanediol di(meth)acrylate, neopentyl glycol di(meth)acrylate, dipropylene glycol di(meth)acrylate, triethylene glycol di(meth)acrylate, dipropylene glycol di(meth)acrylate. Trifunctional examples include: glycerol tri(meth)acrylate and pentaerythritol tri(meth)acrylate. Tetrafunctional examples include pentaerythritol tetra (meth)acrylate. It will be appreciated that mixtures of these compounds may be used. Preferably, where the ester of acrylic acid and alkacrylic acid includes more than one (alk)acrylate group per molecule, preferably the compound comprises a lower alkyl di(meth)acrylate as defined herein, such as hexanediol diacrylate.

It will be appreciated that the dispersing agent may comprise one or more esters of acrylic acid or esters of alkacrylic acid as defined herein. Preferably, the dispersing agent does not include a compound which has more than one (alk)acrylate group per molecule.

A highly preferred dispersing agent comprises a lower hydrocarbyl (alk)acrylate, especially a dispersing agent consisting only of one or more lower hydrocarbyl (alk)acrylates. By the term "lower hydrocarbyl" as used herein we mean any group which includes only hydrogen and carbon atoms. The term "(alk)acrylate" has the same meaning as defined herein in respect of lower alkyl (alk)acrylates, and preferably includes (meth)acrylate. Thus the term lower hydrocarbyl (alk)acrylate embraces the lower alkyl (alk)acrylates, lower aryl (alk)acrylates and lower arylalkylenyl (alk)acrylates as defined herein provided the lower alkyl, the lower aryl and the lower arylalkylenyl groups, respectively, of such molecules include only hydrogen and carbon atoms. In other words, the lower alkyl groups, the lower aryl group and the lower arylalkylenyl group as defined herein include only carbon and hydrogen atoms; they are not substituted or terminated with one or more substituents such as those defined herein, apart from groups containing only carbon and hydrogen, and they are not interrupted by one or more heteroatoms such as oxygen or nitrogen atoms.

Unexpectedly, it has been found that if the dispersing agent comprises a lower hydrocarbyl (alk)acrylate then the polymeric composition of the present invention may exhibit superior resistance to chemicals. Additionally, or alternatively, when the dispersing agent comprises a lower hydrocarbyl (alk)acrylate then the polymeric composition may exhibit improved optical properties, such as improved light transmission, low haze and reduced yellowness of transmitted light, compared with a comparable composition where the dispersing agent does not include a lower hydrocarbyl (alk) acrylate e.g. hydroxyethyl methacrylate. Suitably, such polymeric compositions may be employed in lighting applications and glazing. It will be appreciated by those skilled in the art that when the dispersing agent comprises a lower hydrocarbyl (alk)acrylate, preferably when the dispersing agent consists essentially of one or more lower hydrocarbyl (alk)acrylates, then the dispersing agent is essentially hydrophobic as it does not include any free polar substituents such as hydroxyl or amino groups.

Preferred lower hydrocarbyl (alk)acrylates include lower hydrocarbyl (meth)acrylates. Preferred lower hydrocarbyl (meth)acrylates include methyl (meth)acrylate, ethyl (meth)acrylate, propyl (meth)acrylate, isopropyl (meth)acrylate, n-butyl (meth)acrylate, iso-butyl (meth)acrylate, t-butyl (meth)acrylate, 2-ethylhexyl (meth)acrylate, isobornyl (meth)acrylate, cyclohexyl (meth)acrylate, phenyl (meth)acrylate and benzyl (meth)acrylate. Preferably, the lower hydrocarbyl (meth)acrylate includes a lower alkyl (meth)acrylate as defined hereinbefore which includes only hydrogen and carbon atoms, more preferably a $C_1$ to $C_{12}$ alkyl (meth)acrylate, even more preferably a $C_1$ to $C_8$ alkyl (meth)acrylate and/or isobornyl (meth)acrylate. Most preferably, the lower hydrocarbyl (meth)acrylate includes butyl (meth)acrylate, ethyl (meth)acrylate, methyl acrylate, or isobornyl (meth)acrylate, particularly butyl methacrylate or isobornyl acrylate, especially isobornyl acrylate.

Preferably, the dispersing agent is present in an amount of greater than or equal to 0.2% by wt, more preferably greater than or equal to 0.5% by wt, even more preferably greater than or equal to 1% by wt, even more preferably greater than or equal to 1.5% by wt, even more preferably greater than or equal to 2.0% by wt, even more preferably greater than or equal to 2.5% by wt based on the total weight of the polymerisable mixture.

Preferably, the dispersing agent is present in an amount of less than or equal to 25% by wt, more preferably less than or equal to 20% by wt, even more preferably less than or equal to 15% by wt, even more preferably less than or equal to 10% by wt based on the total weight of the polymerisable mixture.

Suitably, the inorganic oxide particles comprise at least one oxide selected from silicon, titanium, zinc, zirconium and aluminium oxides. Preferably, the inorganic oxide particles comprise at least one oxide selected from silicon, zinc and aluminium oxides. More preferably, the inorganic oxide particles include a silicon oxide. Although a combination of inorganic oxides may be employed preferably a single inorganic oxide is used. Most preferably, the inorganic oxide particles consist essentially of a silicon oxide. A highly preferred silicon oxide comprises colloidal silica.

Preferably, the inorganic oxide particles have a weight average particle size of less than or equal to 350 nm, more preferably less than or equal to 300 nm, even more preferably less than or equal to 250 nm, even more preferably less than or equal to 200 nm, even more preferably less than or equal to 150 nm, most preferably less than or equal to 100 nm.

Preferably, the inorganic oxide particles have a weight average particle size of greater than or equal to 0.1 nm, more preferably greater than or equal to 0.5 nm, more preferably greater than or equal to 1 nm, more preferably greater than or equal to 5 nm, most preferably greater than or equal to 10 nm.

Most preferably, the inorganic oxide particles have a weight average particle size of 1 to 80 nm, especially 10 to 50 nm (e.g. 10 to 48 nm). The weight average particle size may be determined by standard techniques, such as Transmission Electron Microscopy or Photon Correlation Spectroscopy in accordance with ISO 13321 : 1996(E), using a monochromatic He-Ne laser with a fixed wavelength of 632 nm and distilled and filtered water as the dispersion media. For the avoidance of doubt, by the term "weight average particle size" as referred to herein, we mean the volume/mass weighted arithmetic mean diameter D(4,3).

Preferably, the particle size distribution of the inorganic oxide particles is between 1 to 100 nm. By the term particle size distribution we mean that at least 80% by weight, preferably at least 85% by weight of the inorganic oxide particles are of a size of between 1 to 100 nm.

Preferably, the inorganic oxide particles are present in an amount of greater than or equal to 0.1% by wt, more preferably greater than or equal to 0.2% by wt, more preferably greater than or equal to 0.3% by wt, even more preferably greater than or equal to 0.5% by wt, even more preferably greater than or equal to 0.75% by wt, even more preferably greater than or equal to 1 % by wt, even more preferably greater than or equal to 1.2% by wt based on the total weight of the polymerisable mixture.

Preferably, the inorganic oxide particles are present in an amount of less than 10% by weight, more preferably less than or equal to 8% by wt, even more preferably less than or equal to 7% by wt, even more preferably less than or equal to 6% by wt, even more preferably less than or equal to 5% by wt, even more preferably less than or equal to 4% by wt, even more preferably less than or equal to 3% by wt, even more preferably less than or equal to 2.5% by wt based on the total weight of the polymerisable mixture.

It will be appreciated by those skilled in the art that the amount of dispersing agent and the inorganic oxide particles present in the polymerisable mixture depends on the amount of the one or more polymerisable monomers in the polymerisable mixture and the ultimate polymer matrix. For example, a masterbatch of the polymerisable mixture may be formed which includes a relatively high proportion of the dispersing agent and the inorganic oxide particles, for example, 25% by wt of dispersing agent and 10% by wt of the inorganic oxide particles with the balance of the polymerisable mixture consisting essentially of the one or more polymerisable monomers in the polymer matrix. Conveniently, the masterbatch may be diluted by the addition of further quantities of the one or more polymerisable monomers of the polymer matrix prior to polymerising the polymerisable mixture, thereby forming a polymeric composition having a lower amount of dispersing agent and inorganic oxide than the original masterbatch. Alternatively, lower amounts of the dispersing agent (e.g. less than 10% by wt) and the inorganic oxide particles (e.g. 3% by wt may be added to the one or more polymerisable monomers which form the polymer matrix, and the resulting polymerisable matrix polymerised without any further dilution.

Thus, preferably the dispersing agent is present in an amount of greater than or equal to 0.2% by weight, more preferably greater than or equal to 0.5% by weight, even more preferably greater than or equal to 1% by weight, even more preferably greater than or equal to 1.5% by weight, even more preferably greater than or equal to 2% by weight, even more preferably greater than or equal to 2.5% by weight based on the total weight of the polymeric composition.

Preferably, the dispersing agent is present in an amount of less than or equal to 25% by weight, more preferably less than or equal to 20% by weight, even more preferably less than or equal to 15% by weight, even more preferably less than or equal to 10% by weight, even more preferably less than or equal to 9% by weight based on the total weight of the polymeric composition.

Preferably, the inorganic oxide particles are present in an amount of greater than or equal to 0.1% by weight, even more preferably greater than or equal to 0.2% by weight, more preferably greater than or equal to 0.3% by weight, even more preferably greater than or equal to 0.5% by weight, even more preferably greater than or equal to 0.75% by weight, even more preferably greater than or equal to 1% by weight, even more preferably greater than or equal to 1.2% by weight based on the total weight of the polymeric composition.

Preferably, the inorganic oxide particles are present in an amount of less than or equal to 8% by weight, even more preferably less than or equal to 7% by weight, even more preferably less than or equal to 6% by weight, even more preferably less than or equal to 5% by weight, even more preferably less than or equal to 4% by weight, even more preferably less than or equal to 3% by weight, even more preferably less than or equal to 2.5% by weight based on the total weight of the polymeric composition.

Unexpectedly, the inclusion of the inorganic oxide particles significantly improves the chemical resistance of the polymeric composition of the present invention compared with a comparable composition not including inorganic oxide particles. However, it appears that if the amount of inorganic oxide particles exceeds a maximum threshold value then the chemical resistance of the polymeric composition may fall off.

By the term "improved resistance to chemicals" "improved chemical resistance" "enhancing the chemical resistance" as used herein, we mean the polymeric composition of the present invention takes a longer time to rupture than a comparable composition not including the inorganic oxide particles when subjected to a constant tensile load in the presence of a styrene solvent at 23 °C. Such a test is commonly referred to as the "determination of resistance to environmental stress cracking (ESC)" and may be determined in accordance with ISO 22088-2:2006(E) (First Edition) employing Method C and an ISO 527-2 type 1BA test specimen as disclosed therein. Typically, a series of applied stresses between 1 MPa to 10 MPa are applied to the specimens.

Typically, the time taken to rupture a type 1BA test specimen of the polymeric composition of the present invention when measured in accordance with ISO 22088-2:2006(E) at 23 °C in a styrene solvent applying a stress of 7.5 MPa is at least 10% greater than, preferably at least 20% greater than, more preferably at least 30% greater than, most preferably at least 50% greater than the time taken to rupture a type 1 BA test specimen of a comparable polymeric composition not including the inorganic oxide particles and/or the dispersing agent (i.e. the polymer matrix) when measured under identical conditions.

Additionally, the inclusion of inorganic oxide particles in the polymeric composition of the present invention typically produces a polymeric composition which displays an increased rate of shear thinning compared with a comparable composition not including the inorganic oxide particles. In particular, the polymeric composition typically exhibits a lower viscous modulus (G") at a specific shear rate, in particular the higher shear rate range used in standard melt processing techniques e.g. $10^2 s^{-1}$ to $10^5 s^{-1}$, than a comparable composition not including the inorganic oxide particles and/or the dispersing agent. Conveniently, the polymeric composition of the present invention may be melt processed more readily and efficiently than a comparable composition not including the inorganic oxide particles and/or the dispersing agent. Thus, when the polymer matrix of the polymeric composition of the present invention comprises a melt processable polymer, typically the polymeric composition of the present invention may be melt processed more easily and readily than the polymer matrix itself, thereby reducing the costs and improving the efficiency of the melt processing process. Additionally, when the polymer matrix of the polymeric composition of the present invention is itself a non-melt processable polymer, the combination of such a polymer with the inorganic oxide particles and the dispersing agent in the composition of the present invention may permit such a previously non-melt processable polymer to be processed by melt processing techniques. Thus, the polymeric composition of the present invention offers significant advantages in terms of processing polymers and improved resistance to chemicals (i.e. improved resistance to environmental stress cracking).

The inorganic oxide particles are preferably added to the polymerisable monomers which are used to form the polymer matrix in the form of a dispersion in the dispersing agent. Conveniently, suitable dispersions are available commercially from or may be supplied by Clariant of Usine de Lamotte - B.P.1, 60350 Trosly Breuil, France and sold under the trade name of HIGHLINK NanO G, these include: HIGHLINK NanO G 130M-31 a dispersion of colloidal silica in isobornyl acrylate (30% silica content); HIGHLINK NanO G 103-31 a dispersion of colloidal silica in hexane diol diacrylate (30% by wt silica content); HIGHLINK NanO G 100-31 a dispersion of colloidal silica in hydroxyethyl methacrylate (30% by wt silica content); HIGHLINK NanO G 190-4 5/3 a dispersion of colloidal silica in polyether acrylate (45% by wt silica content); HIGHLINK NanO G 130M-4.5/2 a dispersion of colloidal silica in isobornyl acrylate (45% by wt silica content); and, HIGHLINK NanO G 140M-31 a dispersion of colloidal silica in butyl methacrylate (30% by wt silica content).

Suitably, the ratio by weight of the dispersing agent to the inorganic oxide particles in a dispersion comprising inorganic oxide particles and the dispersing agent is preferably in the range of 1:1 to 5:1, more preferably 1:1 to 3:1. Suitably, if the inorganic oxide particles are used in the form of a dispersion in the dispersing agent, then the dispersion is typically present in an amount of 0.2 to 25% by wt, more preferably 0.5 to 20% by wt, most preferably 1 to 10% by wt of the polymerisable mixture.

Suitably, the polymer matrix may comprise a homopolymer or a copolymer formed by polymerising one or more of said polymerisable monomers of the polymerisable mixture. The polymer matrix may comprise a polyester, a polystyrene, a polyamide, a polyolefin, a polyurethane, a polyvinyl halide (e.g. PVC), an epoxy resin, a polycarbonate or an acrylic polymer. Preferably, the polymer matrix comprises an acrylic homo or copolymer. More preferably, the polymer matrix consists essentially of an acrylic homo- or copolymer.

When the polymer matrix comprises an acrylic polymer, the polymer matrix preferably comprises a polymethyl methacrylate homopolymer or an acrylic copolymer derived by polymerising a monomer mixture comprising 60 to 100% by wt methyl methacrylate and up to 40% by wt of at least one other copolymerisable lower alkyl (alk)acrylate, namely a $C_1$-$C_{22}$ alkyl (meth)acrylate as defined hereinbefore, a lower aryl (alk)acrylate or a lower arylalkylenyl (alk)acrylate as defined hereinbefore. Preferably, the polymer matrix comprises an acrylic copolymer.

It will be appreciated that the polymerisable mixture comprises a single polymerisable monomer of methyl methacrylate when the polymer matrix is a polymethyl methacrylate homopolymer and the polymerisable mixture comprises two or more polymerisable monomers when the polymer matrix comprises an acrylic copolymer, namely: methyl methacrylate and one or more copolymerisable lower alkyl (meth)acrylate, lower aryl (meth)acrylate or lower arylalkylenyl (meth)acrylate comonomers.

The dispersing agent may be identical to at least one of said polymerisable monomers used to form the polymer matrix. If the dispersing agent is identical to at least one of said polymerisable monomers then the total combined amount of dispersing agent and polymerisable monomers in the polymerisable mixture is as defined in respect of the polymerisable monomers.

Preferably, the dispersing agent is not identical to any of said polymerisable monomers used to form the polymer matrix. Thus, the dispersing agent preferably has a different chemical structure than each of the one or more polymerisable monomers used to form the polymer matrix. Hence, according to a preferred aspect the polymerisable mixture further includes a dispersing agent. By the term "further includes" we mean the chemical structure of the dispersing agent is chemically distinct from each of the one or more polymerisable monomers used to form the polymer matrix.

Preferably, where the polymer matrix comprises an acrylic copolymer, the polymer matrix is derivable from greater than or equal to 60% by wt, more preferably greater than or equal to 75% by wt, more preferably greater than

7

or equal to 80% by wt, most preferably greater than or equal to 85% by wt of methyl methacrylate monomers based on the total weight of the polymer matrix.

Preferably, where the polymer matrix comprises an acrylic copolymer, the polymer matrix is derivable from less than or equal to 40% by wt, more preferably less than or equal to 25% by wt, more preferably less than or equal to 20% by wt, most preferably less than or equal to 15% by wt of one or more lower alkyl (alk)acrylate, lower aryl (alk)acrylate or lower arylalkylenyl (alk)acrylate comonomers based on the total weight of the polymer matrix.

The term lower alkyl (alk)acrylate, lower aryl (alk)acrylate and lower arylalkylenyl (alk)acrylate in respect of the polymer matrix has an identical meaning as used in respect of the dispersing agent.

Preferred lower alkyl (alk)acrylate comonomers of the polymer matrix are lower alkyl (meth)acrylate comonomers as defined herein, more preferably $C_1$ to $C_{10}$ alkyl (meth)acrylate comonomers, even more preferably $C_1$ to $C_{10}$ alkyl (meth)acrylate comonomers where the alkyl group includes only carbon and hydrogen atoms, even more preferably $C_1$ to $C_8$ alkyl acrylate comonomers where the alkyl group includes only carbon and hydrogen atoms. Exemplary preferred $C_1$ to $C_{10}$ alkyl (meth)acrylate comonomers include methyl acrylate, ethyl (meth)acrylate, n-propyl (meth)acrylate, iso-propyl (meth)acrylate, n-butyl (meth)acrylate, tert-butyl (meth)acrylate, iso-butyl (meth)acrylate, 2-ethyl hexyl (meth) acrylate, octyl (meth)acrylate. Especially preferred $C_1$ to $C_{10}$ alkyl (meth)acrylate comonomers include methyl acrylate, ethyl acrylate, n-propyl acrylate, n-butyl acrylate and 2-ethyl hexyl acrylate.

Preferred lower aryl (alk)acrylate comonomers of the polymer matrix include $C_6$ to $C_{10}$ aryl (meth)acrylate, especially $C_6$ to $C_{10}$ aryl (meth)acrylate where the aryl group includes only hydrogen and carbon atoms, particularly phenyl (meth)acrylate and napthyl (meth)acrylate.

Preferred lower arylalkylenyl (alk)acrylate comonomers of the polymer matrix includes benzyl (meth)acrylate.

A highly preferred acrylic copolymer matrix is derivable by polymerisation of methyl methacrylate and one or more copolymerisable lower alkyl (alk)acrylate comonomers as defined hereinbefore.

Preferably, the polymer matrix does not include any methacrylic acid and acrylic acid residues.

Preferably, the polymer matrix is present in an amount of greater than or equal to 70% by wt, more preferably greater than or equal to 80% by wt, even more preferably greater than or equal to 85% by wt, most preferably greater than or equal to 90% by wt based on the total weight of the polymeric composition.

Preferably, the polymer matrix is present in an amount of less than or equal to 99.5% by wt, more preferably less than or equal to 99% by wt, even more preferably less than or equal to 98% by wt, most preferably less than or equal to 95% by wt based on the total weight of the polymeric composition.

A highly preferred polymeric composition of the present invention comprises a polymer matrix derived from one or more polymerisable monomers and including inorganic oxide particles having a weight average particle size of less than or equal to 400 nm contained therein, wherein said polymeric composition is obtainable by polymerising a polymerisable mixture comprising:

    (a) one or more polymerisable monomers comprising 60 to 100% by wt methyl methacrylate and up to 40% by wt of at least one other copolymerisable lower alkyl (meth)acrylate comonomer as defined herein;
    (b) the inorganic oxide particles as defined herein; and,
    (c) the dispersing agent as defined herein.

It will be appreciated that when the polymeric composition is formed by a curing process then the one or more polymerisable monomers which form the polymer matrix may comprise a syrup of methyl methacrylate, namely polymethyl methacrylate homopolymer dissolved in methyl methacrylate monomers, and if present, one or more lower alkyl (alk) acrylate, lower aryl (alk)acrylate or lower arylalkylenyl (alk)acrylate comonomers.

The polymer matrix, and suitably the polymeric composition of the present invention may be made by conventional free radical, anionic or other polymerisation techniques, for example bulk, solution, emulsion and suspension polymerisation techniques with the addition of suitable initiators, optionally chain transfer agents and optionally other additives such as fillers, pigments, plasticizers, impact modifiers and stabilisers. The polymerisable monomers of the polymer matrix present in the polymerisable mixture are caused to polymerise by initiating the polymerisation reaction, normally by means of activating the added initiator, and maintaining suitable conditions e.g. an elevated temperature, pressure etc. until the required degree of polymerisation has been achieved. Such methods are well known to those skilled in the art. Preferably, the polymerisable mixture is caused to polymerise using free radical polymerisation.

Suitably, the polymerisable mixture includes at least one free radical initiator. Preferably, the polymerisable mixture includes greater than or equal to 0.01% by wt, more preferably greater than or equal to 0.02 wt%, even more preferably greater than or equal to 0.04% by wt free radical initiator based on the total weight of the polymerisable mixture. Suitably, the polymerisable mixture includes less than or equal to 5% by wt, more preferably less than or equal to 2% by wt, even more preferably less than or equal to 1% by wt, most preferably less than or equal to 0.5% by wt free radical initiator based on the total weight of the polymerisable mixture.

Suitable free radical initiators include organic peroxides, hydroperoxides, persulphates, peroxyesters and azo compounds. Examples of such initiators are methyl ethyl ketone peroxide, benzoyl peroxide, cumene hydroperoxide, potassium persulphate, azobisisobutyronitrile (AIBN), azobis(2-methylbutyronitrile), azobis(2,4-dimethylvaleronitrile), azobis(4-cyanovaleric acid), tert-butyl peroxyneodecanoate, dibenzoyl peroxide, cumyl peroxide, tert-butyl peroxy-2-ethyl hexanoate, tert-butyl peroxy diethyl acetate and tert-butyl peroxy benzoate, lauroyl peroxide, 2,5-dimethyl-2,5di(t-butylperoxy)hexane, diethyl peroxide, dipropyl peroxide, dilauryl peroxide, dioleyl peroxide, distearyl peroxide, di(tertiary butyl) peroxide, di(tertiary amyl) peroxide, tertiary butyl hydroperoxide, tertiary amyl hydroperoxide, acetyl peroxide, propionyl peroxide, lauroyl peroxide, stearoyl peroxide, malonyl peroxide, succinyl peroxide, phthaloyl peroxide, acetyl benzoyl peroxide, propionyl benzoyl peroxide, ascaridole, ammonium persulphate, sodium persulphate, sodium percarbonate, potassium percarbonate, sodium perborate, potassium perborate, sodium perphosphate, potassium perphosphate, tetralin hydroperoxide, tertiary butyl diperphthalate, tertiary butyl perbenzoate, 2,4-dichlorobenzoyl peroxide, urea peroxide, caprylyl peroxide, p-chlorobenzoyl peroxide, 2,2-bis(tertiary butyl peroxy)butane, hydroxyheptyl peroxide.

Suitably, the polymerisable mixture as defined herein comprises one or more of said polymerisable monomers as defined herein used to form the polymer matrix, the inorganic oxide particles as defined herein, the dispersing agent as defined herein and an initiator, particularly a free radical initiator. Preferably, the initiator is present in an amount of 0.01% by wt to 5% by wt based on the total weight of the polymerisable mixture.

Suitably, the polymerisable mixture may be polymerised using a bulk polymerisation process e.g. a casting process to produce a high molecular weight polymeric composition of the present invention. In a casting process, for example cell casting, the polymerisable mixture, optionally including a partially polymerised polymer formed by polymerising the polymerisable monomers of the polymer matrix dissolved therein to form a syrup, and other optional additives is filled into the gap between two glass plates separated by a gasket. The polymerisation is then thermally initiated, for example at a temperature of 70 °C, and then allowed to cure at an elevated temperature such as 80 °C to 120 °C.

Typically, the polymeric composition of the present invention formed by a casting process has a high molecular weight. Suitably, the weight average molecular weight (Mw) of the polymeric composition formed by a casting process is greater than or equal to 300,000 Daltons, preferably greater than or equal to 500,000 Daltons, more preferably greater than or equal to 750,000 Daltons. Typically, the weight average molecular weight (Mw) of the polymeric material formed by a casting process is less than or equal to 3,000,000 Daltons, more preferably less than or equal to 2,000,000 Daltons. Such polymeric compositions having weight average molecular weights of above 300,000 Daltons, preferably above 500,000 Daltons are referred to as high molecular weight polymeric compositions of the present invention. The molecular weight may be determined by standard techniques, such as gel permeation chromatography.

Unexpectedly it has been found that the high molecular weight compositions of the present invention may not only exhibit an improved resistance to chemicals but also be substantially insoluble in organic solvents, such as chloroform, compared to a comparable polymeric composition not including the inorganic oxide particles and/or the dispersing agent. Such an effect appears to occur even when the polymeric composition of the present invention includes a relatively low concentration of inorganic oxide particles.

By the term "substantially insoluble in organic solvents" we mean that if 0.1 g of the polymeric composition is added to 10 g of chloroform (i.e. a 1% w/w mixture) in a vial (15 ml) and then sealed, the vial then rotated on rollers at 50 revolutions per minute at room temperature for 24 hours, the polymeric composition removed from the chloroform solvent and allowed to dry at room temperature for 24 hours, then the residual solid content of the polymeric composition is greater than or equal to 90% by weight, preferably greater than or equal to 95% by weight, more preferably greater than or equal to 97% by weight, even more preferably greater than or equal to 98% by weight, even more preferably greater than or equal to 99% by weight.

Thus, according to a preferred aspect of the present invention, there is provided a polymeric composition of the present invention which is substantially insoluble in organic solvents such as chloroform. Suitably, the polymeric compositions of the present invention which are substantially insoluble in organic solvents such as chloroform are high molecular weight polymeric compositions. Such high molecular weight polymeric compositions typically have a weight average molecular weight (Mw) of greater than or equal to 300,000 Daltons, preferably greater than or equal to 500,000 Daltons, more preferably greater than or equal to 750,000 Daltons. Typically, the high molecular weight polymeric compositions have a weight average molecular weight (Mw) of less than or equal to 3,000,000 Daltons, preferably less than or equal to 2,000,000 Daltons. Such polymeric compositions of the present invention are typically formed by a casting process. The solubility of the polymeric composition in chloroform may be determined as outlined above. Additionally, the polymeric composition of the present invention which is substantially insoluble in chloroform may have the same physical and visual appearance following chloroform extraction.

Although the chemical resistance of the polymeric composition of the present invention may depend to a degree on the molecular weight of the polymer matrix, the polymer matrix itself and the type of dispersing agent used, the inclusion of 0.1% by weight inorganic oxide particles in the polymeric composition of the present invention including an acrylic polymer matrix having a molecular weight of 1,000,000 to 2,000,000 Daltons with isobornyl acrylate dispersing agent produced a composition which is substantially insoluble in organic solvents, such as chloroform.

Advantageously, even when relatively low amounts of inorganic oxide particles are included in the polymeric composition of the present invention the composition typically displays increased shear thinning and a lower viscous modulus (G") in the shear rate range used in standard melt processing techniques (i.e. $10^2 s^{-1}$ to $10^5 s^{-1}$) compared to a comparable composition not including the inorganic oxide particles and/or dispersing agent. Conveniently, the increased shear thinning and decreased viscous modulus of such polymeric compositions of the present invention may enable a previously melt processable polymeric composition not including the inorganic oxide particles to be melt processed more easily and readily, and may enable a previously non-melt processable polymeric composition not including the inorganic oxide particles to be melt processed.

Thus according to a preferred aspect, a high molecular weight polymeric composition of the present invention comprises inorganic oxide particles in an amount of less than or equal to 2.0% by wt, more preferably less than or equal to 1.5% by wt, more preferably less than or equal to 1.0% by wt, more preferably less than or equal to 0.3% by wt, more preferably less than or equal to 0.2% by wt, most preferably less than or equal to 0.18% by wt of the polymeric composition based on the total weight of the polymeric composition. It will be appreciated that larger amounts of inorganic oxide particles may be included in the high molecular weight polymeric compositions. However, increasing the amount of inorganic oxide particles may increase the shear viscosity of the polymeric composition and above a maximum threshold value the chemical resistance of the composition may fall off. Unexpectedly, it has been found that for high molecular weight polymeric compositions (i.e. 300,000 Daltons to 3,000,000 Daltons) including the preferred levels of inorganic oxide particles provides an acceptable level of chemical resistance and/or insolubility in contact with organic solvents without significantly affecting the melt-processability of the composition (i.e. without significantly increasing the shear viscosity of the polymeric composition in the shear rate range used in standard melt processing techniques).

The polymerisable composition may also be polymerised by bag polymerisation, suspension, emulsion and solution polymerisation techniques. These techniques are also well known to those skilled in the art. For example, in a bag polymerisation process the polymerisable mixture is filled into a bag and the polymerisation reaction thermally initiated and then allowed to cure at an elevated temperature. Suspension polymerisation techniques are described in Kirk-Othmer Encyclopaedia of Chemical Technology, John Wiley and Sons, Vol. 16, p. 506 to 537. Such techniques typically produce polymers having a lower molecular weight as it is desirable to include a chain transfer agent in the polymerisable mixture to control the molecular weight of the polymer. Suitable chain transfer agents include thiols, such as dodecyl mercaptan, n-propyl mercaptan, n-butyl mercaptan, t-butyl mercaptan, 2-ethylhexylthioglycolate, thiophenol and butanthiol.

Preferably, the chain transfer agent is present in an amount of greater than or equal to 0.01% by wt, more preferably greater than or equal to 0.03% by wt, even more preferably greater than or equal to 0.05% by wt, even more preferably greater than or equal to 0.08% by wt, even more preferably greater than or equal to 0.1 % by wt based on the total weight of the polymerisable mixture. Preferably, the chain transfer agent is present in an amount of less than or equal to 1% by wt, more preferably less than or equal to 0.9% by wt, even more preferably less than or equal to 0.8% by wt, even more preferably less than or equal to 0.7% by wt, even more preferably less than or equal to 0.6% by wt, most preferably less than or equal to 0.5% by wt based on the total weight of the polymerisable mixture.

Thus according to a further preferred aspect, the polymerisable mixture comprises one or more polymerisable monomers as defined herein, the inorganic oxide particles as defined herein, the dispersing agent as defined herein, an initiator as defined herein and a chain transfer agent as defined herein. Such polymerisable mixtures are suitable for use in bag polymerisation, suspension, solution and emulsion polymerisation techniques. Typically, a polymeric composition of the present invention derived from such a polymerisable mixture has a weight average molecular weight (Mw) of greater than or equal to 20,000 Daltons, more preferably greater than or equal to 50,000 Daltons. Typically a polymeric composition of the present invention derived from such a polymerisable mixture has a weight average molecular weight (Mw) of less than or equal to 250,000 Daltons, more preferably less than or equal to 200,000 Daltons. Such polymeric compositions may be referred to herein as low molecular weight polymeric compositions of the present invention.

Unexpectedly, it has been found that although the low molecular weight polymeric compositions of the present invention are typically more soluble in organic solvents such as chloroform than the corresponding high molecular weight counterparts, the low molecular weight polymeric compositions of the present invention typically display improved resistance to chemicals as defined herein (i.e. improved resistance to environmental stress cracking) than comparable polymeric compositions not including the inorganic oxide particles and/or dispersing agent. Additionally, such low molecular weight polymeric compositions of the present invention, which are typically melt-processable, typically exhibit an increased rate of shear thinning particularly over the higher shear rate range used in standard melt processing techniques (e.g. extrusion, blow-moulding, injection moulding, $10^2 s^{-1}$ to $10^5 s^{-1}$) than a comparable polymeric composition not including the inorganic oxide particles and/or dispersing agent. Thus, the low molecular weight polymeric compositions of the present invention may not only be melt-processed more easily and readily than a comparable composition not including the inorganic oxide particles, but also may offer significant advantages in terms of resistance to chemicals and resistance to environmental stress cracking.

Preferably, the low molecular weight polymeric compositions of the present invention include greater than or equal to 0.3% by wt, more preferably greater than or equal to 0.5% by wt of inorganic oxide particles based on the total weight of the polymeric composition. Preferably, the low molecular weight polymeric composition of the present invention include less than or equal to 8% by wt, more preferably less than or equal to 6% by wt, even more preferably less than or equal to 5% by wt, even more preferably less than or equal to 3% by wt, most preferably less than or equal to 2.5% by wt of inorganic oxide particles based on the total weight of the polymeric composition.

The polymeric composition of the present invention may optionally include other additives for example curing agents, colorants, stabilisers, lubricants, fillers, toughening agents, plasticizers and stabilisers. These additives may be present in the polymerisable mixture and incorporated in the polymer matrix by polymerising the polymerisable mixture. Alternatively, or additionally, the additives may be incorporated in the polymeric composition by melt processing techniques.

Suitable colourants which may be added to the polymerisable matrix include pigments such as titanium dioxide, carbon black, zinc white, indanthrone, quinacridone phthalocyanine, iron oxide, titanium oxide and ultramarine blue. It will be appreciated by those skilled in the art that such pigments are typically particulates having a particle size of greater than 1 to 10 microns. Suitably, the pigment may be in particulate form which may be added directly to the polymerizable matrix, such as white bar sand, red brick dust and grey cinder dust. Alternatively, or additionally, the particulate pigment may be mixed with a carrier liquid and then added to the polymerizable matrix.

Suitably, the fillers may be natural mineral filler particles selected from aluminas, silicates, inorganic aluminates, inorganic phosphates, inorganic sulphates, inorganic carbonates, inorganic sulphides, inorganic carbides, inorganic oxides and combinations thereof. It will be appreciated by those skilled in the art that such fillers typically have a particle size of a few hundred microns. Examples of suitable natural mineral filler particles include nesosilicates (single tetrahedrons); sorosilicates (double tetrahedrons); inosilicates (single and double chains); cyclosilicates (rings); phyllosilicates (sheets) and tectosilicates (frameworks). A further suitable silicate class of minerals is the tectosilicate subclass and includes the feldspar group, the feldspathoid group, the quartz group and the zeolite group. Examples of fillers of the quartz group of the tectosilicate subclass include coesite, cristobalite, quartz and tridymite. Alternatively, suitable synthetic fillers may be used. Such suitable synthetic fillers include glass powder, ceramics, porcelain, cinder, slag and finely divided $SiO_2$.

Suitable curing agents include isocyanates, acid anhydrides, amines, amino resins or compounds having a glycidyl group. Examples of suitable isocyanates include hexamethylene diisocyanate, tolylene diisocyanate, hydrogenated tolylene diisocyanate and blocked diisocyanates thereof. Examples of suitable amines include diethylenetriamine, triethylenetetramine, xylenediamine, m-phenylenediamine, benzyldimethylamine and bisaminopropyltetraoxa-spiro-undecane. Examples of suitable acid anhydrides include phthalic anhydride, pyromellitic anhydride and trimellitic anhydride. Examples of suitable amino resins include alkyl ethers of methylolmelamine, alkyl ethers of methylolurea and alkyl ethers of benzoylguanamine. Examples of suitable glycidyl compounds include aliphatic or aromatic diepoxide compounds or aromatic triepoxide compounds.

Suitable plasticizers for addition to the compositions include polyethylene glycol, polypropylene glycol, dimethyl phthalate, dibutyl phthalate and dioctyl phthalate.

Stabilizers which are suitable for the compositions include steric stabilizers and UV stabilizers. Suitable steric stabilizers include protective colloids and non-ionic surfactants. Examples of protective colloids include chemically grafted or strongly absorbed protective colloids, for example fully hydrolysed poly(vinyl alcohol), partially hydrolysed poly(vinyl alcohol), poly(vinyl pyrollidone), hydroxyethyl cellulose and mixtures thereof. Examples of suitable non-ionic surfactants include ethoxylated alkyl phenols, for example octyl phenols and nonyl phenols modified with ethylene oxide, ethoxylated alcohols, for example ethoxylated lauryl alcohol, ethoxylated mercaptans, ethoxylated fatty acids, ethoxylated amines, ethoxylated fatty esters, ethoxylated oils, ethoxylated sorbitan fatty acid esters, ethoxylated sucrose esters and poly (ethylene oxide-propylene oxide) block copolymers. Suitable UV stabilizers include hindered-amine light stabilizers, 2-hydroxy-benzophenones, 2-hydroxyphenylbenzotriazoles, and transition inorganic complexes such as Ni(II) oxime chelates.

The polymeric composition of the present invention may be in the form of sheets, beads, pellets or powders.

The polymeric composition of the present invention may be melt processed by standard melt processing techniques, such as extrusion, co-extrusion, blow moulding or injection moulding. Suitably, the polymeric composition is thermoplastic.

Thus according to a further preferred aspect, the polymeric composition of the present invention is melt processable.

By the term melt-processable we mean the polymeric composition melts fully to form a molten flowable melt when heated at a temperature of between 180 °C to 300 °C in conventional melt processing apparatus e.g. extruder or injection moulding machine in the shear rate range used in standard melt processing techniques i.e. $10^2 s^{-1}$ to $10^5 s^{-1}$.

According to a second aspect, the present invention provides a method of manufacturing a polymeric composition as defined herein, the method comprising providing a polymerisable mixture as defined herein and polymerising the polymerisable mixture.

The polymerisable mixture may be polymerised using conventional free radical or anionic polymerisation techniques. Preferably, the polymerisable mixture is polymerised by free radical polymerisation techniques. Suitably, the polymerisable mixture includes at least one free radical initiator as defined herein.

The polymerisable mixture may be polymerised by bulk polymerisation techniques where the mixture is cured, for example a casting process or bag polymerisation.

Alternatively, the polymerisable mixture may be polymerised using a suspension, solution or emulsion polymerisation technique. Suitably, when a suspension, solution or emulsion technique is employed then the polymerisable mixture further includes a chain transfer agent as defined herein. Additionally, the polymerisable mixture may further include a chain transfer agent as defined herein when employing a bag polymerisation technique.

The polymerisable mixture may further include one or more additives as defined herein. Alternatively, or additionally, the one or more additives may be melt blended with the polymeric composition of the present invention.

According to a third aspect, the present invention provides a method of manufacturing an article comprising shaping the polymeric composition of the present invention to form said article.

The polymeric composition may be shaped by thermoforming. For example, a sheet of the polymeric composition of the present invention may be thermoformed to form a shaped article. A key feature of the present invention is that the polymeric composition may be melt processed by standard techniques, for example, extrusion, co-extrusion, blow moulding or injection moulding. Conveniently, the polymeric composition of the present invention may be formed into a shaped article directly by employing such melt processing techniques.

Thus according to a fourth aspect, the present invention provides a method of manufacturing an article comprising providing a polymeric composition of the present invention or prepared according to the second aspect and melt processing the polymeric composition to form an article. Preferably, the article is formed by moulding the molten polymeric composition e.g. by injection moulding.

In the method, the polymeric composition is typically subjected to a shear rate of at least 100 s$^{-1}$, preferably at least 115 s$^{-1}$, more preferably at least 140 s$^{-1}$ during the formation of said shaped article.

It will be appreciated that the polymeric composition of the present invention may be shaped in the form of sheets or film. It may be extruded or moulded into various shapes or co-extruded or laminated onto other materials, for example rigid or foamed forms of ABS, PVC, polystyrene polymers, including HIPS and other modified styrene polymers or polyolefins.

A further advantage of the present invention is that the polymeric composition of the present invention and an article formed therefrom may exhibit a high Total White Light Transmission (TWLT). The TWLT may be measured with a Datacolor Spectraflash 500 colorimeter in accordance with ASTM E1331 and E1164. Typically, the polymeric composition of the present invention in the form of a cast sheet having a thickness of 3.2 mm exhibits a TWLT of greater than or equal to 80%, more preferably greater than or equal to 85%, most preferably greater than or equal to 90% when measured in accordance with ASTM E1331 and E1164.

Additionally, the polymeric composition of the present invention and an article formed therefrom may exhibit a low light transmission haze. Transmission haze represents a measure of optical clarity of a polymer; a polymer having a lower light transmission haze is clearer (i.e. less cloudy) than a polymer having a higher light transmission haze. Transmission haze may be measured with a Datacolor Spectraflash 500 colorimeter in accordance with ASTM D1003. Typically, the polymeric composition of the present invention in the form of a cast sheet having a thickness of 3.2 mm exhibits a light transmission haze of less than or equal to 8%, preferably less than or equal to 6%, more preferably less than or equal to 5%, even more preferably less than or equal to 3%, most preferably less than or equal to 1% when measured in accordance with ASTM D1003.

Suitably, the polymeric composition of the present invention and articles formed therefrom are suitable for use in lighting and glazing applications, for example, lighting areas, signage, containers, point of purchase displays, furniture applications, office doors, shower doors, etc.

Although the polymeric composition of the present invention is suitable for use in lighting and glazing applications, the improved chemical resistance of the polymeric composition means the composition may be employed in other applications.

Thus according to a further aspect, there is provided a chemical resistant component comprising a polymeric material of the present invention or manufactured according to the second aspect of the present invention. By the term chemical resistant we mean the polymeric material exhibits improved resistance to chemicals as defined herein compared to a comparable polymeric material not including inorganic oxide particles.

The chemical resistant component may be a co-extruded or laminated component.

The component may be for use in construction.

The component may be for use in construction of a building. For example, it could be a solid or coextruded building component, for example a soffit board, barge board, fascia board, cladding board, siding, gutter, pipe, shutters, window casement, window board, window profile, conservatory profile, door panels, door casement, roofing panel, architectural accessory or the like.

The component may be for use in constructing a vehicle or in another automotive application, both as a bulk material or as a coextruded laminate. Such applications include, but are not limited to, decorative exterior trim, lighting, instrument panels, cab moldings, bumpers (fenders), louvers, rear panels, accessories for buses, trucks, vans, campers, farm vehicles and mass transit vehicles, side and quarter panel trim or the like.

The component may be used in applications both indoors or outdoors, for example bathtubs, spas, shower stalls, counters, bathroom fixtures, toilet seats, kitchen housewares, sinks, refrigerator liners or bodies, fencing, trash cans, garden furniture or the like.

The invention further extends to a chemical-resistant component for an outdoor application comprising a polymeric material of the present invention or manufactured in a method according to the second aspect of the present invention.

Outdoor applications include the aforementioned building components and include signage, for example for petrol stations (or the like).

The invention further extends to a chemical-resistant extrusion comprising a polymeric material of the present invention or manufactured in a method according to the second aspect of the present invention.

The invention extends to the use of a component made of a polymeric material of the present invention or manufactured in a method according to the second aspect of the present invention in construction and/or in outdoor applications.

The invention extends to a building comprising a component made out of a polymeric material of the present invention or manufactured in a method according to the second aspect of the present invention.

The invention extends to a component which includes a substrate and a capstock material wherein at least one of either the substrate or the capstock material is a polymeric material of the present invention or manufactured in a method according to the second aspect of the present invention.

The invention further extends to the use of inorganic oxide particles having a weight average particle size of less than or equal to 400 nm as defined herein in combination with a dispersing agent as defined herein for enhancing the chemical resistance of a polymer matrix as defined herein. Suitably, the improved chemical resistance may be measured by the techniques defined herein.

The invention further extends to the use of inorganic oxide particles having a weight average particle size of less than or equal to 400 nm as defined herein in combination with a dispersing agent as defined herein for increasing the rate of shear thinning of a polymer matrix as defined herein.

By the term "increasing the rate of shear thinning" we mean the shear viscosity ($\eta^*(\omega)$) of the polymer matrix including the inorganic oxide particles and the dispersing agent decreases more rapidly over a defined range of increasing shear rate when measured using a torsional rheometer using the methodology as defined herein compared to a polymer matrix not including the inorganic oxide particles and the dispersing agent when measured under identical conditions. Preferably, the shear rate range is $10^2 s^{-1}$ to $10^5 s^{-1}$.

According to a further aspect, the present invention provides the use of inorganic oxide particles having a weight average particle size of less than or equal to 400 nm as defined herein in combination with a dispersing agent as defined herein for decreasing the viscous modulus (G") of a polymer matrix.

Preferably, the decrease in viscous modulus (G") is observed when measured in the standard shear rate range used in melt processing techniques i.e. $10^2 s^{-1}$ to $10^5 s^{-1}$. The viscous modulus of a polymer matrix and the polymeric composition of the present invention may be measured in accordance with the methodology as defined herein.

According to a further aspect, the present invention provides a method of enhancing the chemical resistance of a polymer matrix derived from one or more polymerisable monomers as defined herein, the method comprising adding inorganic oxide particles having a weight average particle size of less than or equal to 400 nm as defined herein in combination with a dispersing agent as defined herein to a polymerisable mixture comprising said one or more polymerisable monomers of the polymer matrix and then polymerising the resulting mixture.

The invention will now be described by way of the following non-limiting examples.

Example 1 - Preparation of cast polymethyl methacrylate

A mixture comprising 2,2-azobisisobutyronitrile (AIBN; 0.06% by weight), HIGHLINK NanO G 130M-31 which is a dispersion of 30% by weight colloidal silica having a weight average particle size of 13 nm in isobornyl acrylate (0.6% by weight containing 0.18% by wt silica) with the balance of the composition being made up of standard polymethyl methacrylate monomer (PMMA) syrup comprising a solution of PMMA in methyl methacrylate monomer was mixed with a high shear mixer for 2 minutes. The mixture was placed in a cell comprising two glass sheets spaced 3.2 mm apart from each other by a PVC gasket. The cell was sealed and immersed in a water bath at 60 °C for 20 hours. The mixture was then cured for 2 hours at 80 °C, followed by heating at a rate of 0.5 °C/min up to 120 °C and held at 120 °C for 1 hour. The cell was then cooled and the glass sheets removed to release the resulting cast PMMA sheet. It was not possible to determine the molecular weight of the polymer by gel permeation chromatography as it was insoluble in chloroform.

Examples 2 to 12

Examples 2 to 12 were prepared in the same way as Example 1 except the amount of the dispersion in the polymerisable mixture changed and/or a different dispersion employed. The polymeric compositions of Examples 2 to 12 are detailed in Table 1. In Table 1 HIGHLINK NanO G 150-31 is a dispersion of 30% by weight colloidal silica having a weight average particle size of 13 nm in ethyl hexyl acrylate (Example 9); HIGHLINK NanO G 100-31 is a dispersion of 30% by weight colloidal silica having a weight average particle size of 13 nm in hydroxyl ethyl methacrylate (Example 10); HIGHLINK NanO G 190-4 5/3 is a dispersion of 45% by weight colloidal silica having a weight average particle size of 50 nm in polyether acrylate (Example 11); HIGHLINK NanO G 130M-4.5/2 is a dispersion of 45% by wt colloidal silica having a weight average particle size of 20 nm in isobornyl acrylate (Example 8); and, HIGHLINK NanO G 140M-31 is a dispersion of 30% by wt colloidal silica having a weight average particle size of 13 nm in butyl methacrylate (Example 12).

Table 1

| Example | Dispersion % by wt dispersion | Dispersing agent | % by wt silica in composition | % by wt dispersing agent in composition |
|---|---|---|---|---|
| 2 | HIGHLINK 0.5 NanO G 130M-31 | Isobornyl acrylate | 0.15 | 0.35 |
| 3 | HIGHLINK 1.0 NanO G 130M-31 | Isobornyl acrylate | 0.30 | 0.70 |
| 4 | HIGHLINK 2.0 NanO G 130M-31 | Isobornyl acrylate | 0.60 | 1.40 |
| 5 | HIGHLINK 4.0 NanO G 130M-31 | Isobornyl acrylate | 1.20 | 2.80 |
| 6 | HIGHLINK 8.0 NanO G 130M-31 | Isobornyl acrylate | 2.40 | 5.60 |
| 7 | HIGHLINK 12.0 NanO G 130M-31 | Isobornyl acrylate | 3.60 | 8.40 |
| 8 | HIGHLINK 4.0 NanO G 130-45/2 | Isobornyl acrylate | 1.80 | 2.20 |
| 9 | HIGHLINK 4.0 NanO G 150-31 | Ethyl hexy acrylate | 1.20 | 2.80 |
| 10 | HIGHLINK 4.0 NanO G 100-31 | Hydroxyethyl methacrylate | 1.20 | 2.80 |
| 11 | HIGHLINK 4.0 NanO G 190-45/3 | Polyether acrylate | 1.80 | 2.20 |
| 12 | HIGHLINK 4.0 NanO G 140M-31 | Butyl methacrylate | 1.20 | 2.80 |

Example 13

The polymeric composition of Example 13 was prepared in the same manner as Example 1, except 4% by wt of the dispersion HIGHLINK NanO G 130M-31 was used (1.2% by wt silica and 2.80% by wt isobornyl acrylate in the polymerisable mixture) using 2,2-azobis(2,4-dimethyl valeronitrile) (V65 available from Wako 0.05% by wt) initiator.

Example 14

The polymeric composition of Example 14 was prepared in the same manner as Example 1, except 4% by wt of the dispersion HIGHLINK NanO G 130M-31 was used (1.2% by wt silica and 2.80% by wt isobornyl acrylate in the polymerisable mixture) using 2,2-azobis(2,4-dimethyl valeronitrile) (V65 available from Wako 1.0% by wt) initiator.

Example 15

The polymeric composition of Example 15 was prepared in the same manner as Example 1, except 4% by wt of the dispersion HIGHLINK NanO G 130M-31 was used (1.2% by wt silica and 2.80% by wt isobornyl acrylate in the polymerisable mixture) using a peroxide initiator Triganox 23 (0.1 % by wt) available from Akzo Nobel.

Example 16

The polymeric composition of Example 16 was prepared in the same manner as Example 1, except 4% by wt of the dispersion HIGHLINK NanO G 130M-31 was used (1.2% by wt silica and 2.80% by wt isobornyl acrylate in the polymerisable mixture) using a peroxide initiator Triganox 23 (0.2% by wt) available from Akzo Nobel.

Example 17 - Preparation of methyl methacrylate polymeric composition by suspension polymerisation

A 5 litre round bottom flask with four baffles in the flask walls and equipped with a shaft driven paddle stirrer passing down an alembic condenser is charged with 28 g disodium hydrogen phosphate dihydrate, 2000 g deionised water, and 100 g of 1% sodium polymethacrylate (high molecular weight polymethylacrylate, neutralised with NaOH) solution in water. The suspension is heated to 40°C to 50°C with stirring to dissolve the sodium polymethacrylate, and nitrogen is bubbled through the solution for 30 minutes to remove oxygen. The nitrogen purge is stopped and 1080 g methyl methacrylate, 46 g (4% by wt) HIGHLINK NanO G 130M-31 a dispersion of 30% by wt colloidal silica having a weight average particle size of 13 nm in isobornyl acrylate, 2.50 g (0.22% by wt) 2,2'-azobis(isobutyronitrile) (AIBN) and 2.80 g (0.25% by wt) dodecyl mercaptan are then charged to the reaction flask. A nitrogen blanket is maintained over the reactants. The reaction mixture is heated to the reaction temperature of 82°C and maintained while the reaction proceeds. The stirrer speed may need to be increased during the reaction exotherm which can push the temperature up to ca. 95°C and water may need to be added if the batch foams excessively. After the exotherm begins to subside the bath is heat-treated to reduce residual monomer levels and decompose any residual initiator by heating at 90°C for 1 hour. The reaction mixture is cooled and then centrifugally washed by pouring the reaction slurry into a centrifuge bag, dewatering and washing with 2 x 2 litres deionised water, with dewatering between each addition. The centrifuge bags have a pore size of ca. 75 microns. The filtered and washed polymer is spread onto trays and dried in an air oven at a temperature of 75 °C for 24 hours, to yield the acrylic polymer. It was not possible to measure the molecular weight of the polymer by gel permeation chromatography as the polymer was insoluble in chloroform.

Examples 18 to 21

Examples 18 to 21 were prepared in the same manner as Example 17, except the amount of chain transfer agent (dodecyl mercaptan) employed was altered. Each of Examples 18 to 21 employed 4% by wt of the dispersion of HIGHLINK NanO G 130M-31. However, Example 18 employed 0.1% of dodecyl mercaptan; Example 19 employed 0.5% dodecyl mercaptan; Example 20 employed 1% dodecyl mercaptan and Example 21 employed 4% by wt dodecyl mercaptan. The weight average molecular weight of the polymer of Example 21 was 10,000 Daltons, the polymer of Example 20 had a weight average molecular weight of 110,000 Daltons and the weight average molecular weight of the polymer of Example 19 was 175,000 as determined by gel permeation chromatography. It was not possible to determine the molecular weight of the polymer of Example 18 as it was insoluble in chloroform.

Example 22 - Preparation of an acrylic copolymer polymeric composition by suspension polymerisation

A 5 litre round bottom flask with four baffles in the flask walls and equipped with a shaft driven paddle stirrer passing down an alembic condenser is charged with 28 g disodium hydrogen phosphate dihydrate, 2000 g deionised water, and 100 g of 1% sodium polymethacrylate (high molecular weight polymethylacrylate, neutralised with NaOH) solution in water. The suspension is heated to 40°C to 50°C with stirring to dissolve the sodium polymethacrylate, and nitrogen is bubbled through the solution for 30 minutes to remove oxygen. The nitrogen purge is stopped and 1080 g methyl methacrylate, 19.25 g ethyl acrylate, 46 g (4% by wt) HIGHLINK NanO G 130M-31 a dispersion of 30% by weight colloidal silica having a weight average particle size of 13 nm in isobornyl acrylate, 2.50 g 2,2'-azobis(isobutyronitrile) (AIBN) and 2.80 g dodecyl mercaptan are then charged to the reaction flask. A nitrogen blanket is maintained over the reactants. The reaction mixture is heated to the reaction temperature of 82°C and maintained while the reaction proceeds. The stirrer speed may need to be increased during the reaction exotherm which can push the temperature up to ca. 95°C and water may need to be added if the batch foams excessively. After the exotherm begins to subside the bath is heat-treated to reduce residual monomer levels and decompose any residual initiator by heating at 90°C for 1 hour. The reaction mixture is cooled and then centrifugally washed by pouring the reaction slurry into a centrifuge bag, dewatering and washing with 2 x 2 litres deionised water, with dewatering between each addition. The centrifuge bags have a pore size of ca. 75 microns. The filtered and washed polymer is spread onto trays and dried in an air oven at a temperature of 75 °C for 24 hours, to yield the acrylic copolymer. It was not possible to determine the molecular weight of the polymer by gel permeation chromatography as the polymer was insoluble in chloroform.

Comparative Example A - Cast polymethylmethacrylate without colloidal silica

The polymer of Comparative Example A was prepared as in Example 1, except the dispersion of HIGHLINK NanO G 130M-31 was replaced with isobornyl acrylate only (2% by wt).

Comparative Example B - Cast polymethylmethacrylate including colloidal silica without an ethylenically unsaturated dispersing agent

The polymer of Comparative Example B was prepared as in Example 1, except the dispersion of HIGHLINK NanO G 130M-31 was replaced with HIGHLINK NanO G 601 H 4.5/2 (4% by weight) which comprises a dispersion of 45% by weight colloidal silica having a weight average particle size of 25 nm in butyl acetate.

Organic solvent solubility

In order to assess the solubility of the polymers in an organic solvent, 0.1 g of the polymer is added to 10 g of chloroform (i.e. 1 % w/w mixture) in a vial (15 ml) and then sealed. The vial is rotated on a set of rollers at 50 revolutions per minute at room temperature for 24 hours, the polymer sample removed from the chloroform, dried at room temperature for 24 hours and the residual solid content of the polymer measured. A polymer is regarded as insoluble if the residual weight of the polymer is greater than or equal to 90% by wt, preferably greater than or equal to 95% by weight, of the initial weight i.e. the polymer following exposure to chloroform weights at least 0.090 g. The chemical resistance of a number of polymers are detailed in Table 2.

Table 2

| Example | Soluble in chloroform | Type of polymer | Type of dispersion |
|---|---|---|---|
| 2 | No | Cast | 0.5% HIGHLINK NanO G 130M-31 (isobornyl acrylate) |
| 3 | No | Cast | 1.0% HIGHLINK NanO G 130M-31 (isobornyl acrylate) |
| 4 | No | Cast | 2.0% HIGHLINK NanO G 130M-31 (isobornyl acrylate) |
| 8 | No | Cast | 4.0% HIGHLINK NanO G 130-4.5/2 (isobornyl acrylate) |
| 9 | No | Cast | 4.0% HIGHLINK NanO G 150-31 (ethyl hexyl acrylate) |
| 10 | Yes | Cast | 4.0% HIGHLINK NanO G 100-31 (hydroxyethyl methacrylate) |
| 11 | No | Cast | 4.0% HIGHLINK NanO G 190-45/3 (polyether acrylate) |
| 12 | No | Cast | 4.0% HIGHLINK NanO G 140M-31 (butyl methacrylate) |
| 13 | No | Cast | 4.0% HIGHLINK NanO G 130M-31 (isobornyl acrylate), V65 initiator |
| 14 | No | Cast | 4.0% HIGHLINK NanO G 130M-31 (isobornyl acrylate), V65 initiator |

(continued)

| Example | Soluble in chloroform | Type of polymer | Type of dispersion |
|---|---|---|---|
| 15 | No | Cast | 4.0% HIGHLINK NanO G 130M-31 (isobornyl acrylate), T23 initiator |
| 16 | No | Cast | 4.0% HIGHLINK NanO G 130M-31 (isobornyl acrylate), T23 initiator |
| 17 | No | Suspension | 4.0% HIGHLINK NanO G 130M-31 + 0.25% chain transfer agent |
| 18 | No | Suspension | 4.0% HIGHLINK NanO G 130M-31 + 0.1% chain transfer agent |
| 19 | Yes | Suspension | 4.0% HIGHLINK NanO G 130M-31 + 0.50% chain transfer agent |
| 20 | Yes | Suspension | 4.0% HIGHLINK NanO G 130M-31 + 1.0% chain transfer agent |
| 21 | Yes | Suspension | 4.0% HIGHLINK NanO G 130M-31 + 4.0% chain transfer agent |
| Comparative Example A | Yes | Cast | 4.0% isobornyl acrylate only |
| Comparative Example B | Yes | Cast | 4.0% HIGHLINK NanO G 601H 4.5/2 |

The results demonstrate that the insolubility of a polymeric composition in an organic solvent is significantly improved when the polymeric composition includes the dispersing agent and colloidal silica compared to a comparative polymeric composition which includes the dispersing agent only (see Examples 2, 3, 4, 8, 9, 11, 12, 13, 14, 15 and 16 in comparison to Comparative Example A in Table 2).

The results also demonstrate that the insolubility of a polymeric composition in an organic solvent is significantly improved when the polymeric composition includes an ethylenically unsaturated dispersing agent and colloidal silica compared to a comparative polymer composition including colloidal silica and a dispersing agent which does not include an ethylenically unsaturated bond (see Examples 2, 3, 4, 8, 9, 11, 12 to 16 in comparison to Comparative Example B).

Additionally, the insolubility of a polymeric composition is increased when the polymeric composition includes colloidal silica and a hydrophobic dispersing agent compared to a polymeric composition which includes colloidal silica and a hydrophilic dispersing agent (compare Examples 8, 9, 12 to 16 with Example 10).

Additionally, the improved insolubility of a polymeric composition is also realised for a polymeric composition, produced by suspension polymerisation techniques. However, the effect diminishes with a decrease in molecular weight of the polymer i.e. by increasing the amount of chain transfer agent (see Examples 17 to 21).

Optical Properties

The Total White Light Transmission (TWLT) was determined for polymer sheet samples of 3.2mm thickness using a Datacolor Spectraflash 500 colorimeter in accordance with ASTM: E1331 and E1164. The transmission haze of the samples was determined in accordance with ASTM D1003. The results are detailed in Table 3.

Table 3

| Example | Dispersion % by wt in polymerisable mixture | Total White Light Transmittance (TWLT %) | Transmission Haze (%) | Yellowness Index |
|---|---|---|---|---|
| 9 | 4.0% (colloidal silica: ethyl hexyl acrylate 3:7) | 92.1 | 0.8 | 1.8 |
| 11 | 4.0% (colloidal silica: polyether acrylate 45:55) | 86.3 | 2.1 | 8.7 |
| 5 | 4.0% (colloidal silica: isobornyl acrylate 3:7) | 91.6 | 1.7 | 0.9 |
| 10 | 4.0% (colloidal silica: hydroxyethyl methacrylate 3:7) | 87.6 | 12 | 3.5 |
| 12 | 4.0% (colloidal silica: butyl methacrylate 3:7) | 91.5 | 1.8 | 1.4 |

(continued)

| Example | Dispersion % by wt in polymerisable mixture | Total White Light Transmittance (TWLT %) | Transmission Haze (%) | Yellowness Index |
|---|---|---|---|---|
| 8 | 4.0% (colloidal silica: isobornyl acrylate 45:55) | 91.3 | 1.7 | 1.4 |

The results in Table 3 demonstrate that superior optical properties, in particular a low transmission haze and reduced yellowness of transmitted light, are typically observed when a hydrocarbyl (meth)acrylate is employed as a dispersing agent compared with a dispersing agent which includes hydrophilic groups i.e. hydroxyethyl methacrylate (compare Examples 5, 8, 9,11 and 12 with Example 10).

Glass Transition Temperature Tg

The glass transition Tg for each polymer was characterised using differential scanning calorimetry (DSC), using the procedure as outlined below. The Tg characterisation method used is the extrapolated onset temperature on second reheat.

The equipment used was a Mettler Toledo TC15 TA controller, with a circular pan geometry approximately 5 mm in diameter by 1mm in depth, made from aluminium, with a nominal thickness of 15 $\mu$m. The samples were heated at a scan rate of 20°C /min. Measurements were made using nitrogen of purity >99.9%, and 50ml/min as the flow rate. There were no indications of any side reactions during the glass transition measurement. After first heating the pan was cooled using liquid nitrogen before reheating using the previously described conditions. The results are detailed in Table 4. The control is a methyl methacrylate homopolymer.

| Sample | Tg °C |
|---|---|
| Control | 106.97 |
| Comparative Example A | 115.75 |
| 2 | 106.87 |
| 3 | 112.03 |
| 4 | 113.27 |
| 5 | 112.37 |
| 6 | 112.13 |
| 7 | 108.24 |
| 8 | 111.24 |
| 9 | 110.77 |
| 10 | 102.81 |
| 11 | 110.90 |
| 12 | 105.58 |
| 13 | 114.51 |
| 14 | 110.62 |
| 15 | 113.49 |
| 16 | 109.92 |

The results demonstrate that the Tg of the polymeric composition of the present invention is generally at least comparable to the Tg of a methyl methacrylate homopolymer. However, in the majority of cases the Tg of the polymeric compositions of the present invention is greater than the Tg of a methyl methacrylate homopolymer. Conveniently, the range of applications of the polymeric composition of the present invention is not compromised due to a large decrease in Tg compared with PMMA. Suitably, like PMMA the polymeric compositions of the present invention are suitable for use in applications which require moderate to high temperature resistance.

Thermogravimetric Analysis

The degradation temperature and weight loss of a polymer is measured by thermogravimetric analysis using a TGA 2950 instrument obtainable from TA Instruments as outlined below. The TGA 2950 instrument is fitted with an evolved gas analysis (EGA) furnace that offers the advantage of a fully enclosed heating element. The TGA 2950 instrument has the advantage that a thermocouple is located within the sample chamber adjacent to the sample. As a result the measured temperature is a true reflection of the sample rather than the furnace temperature value. Nitrogen gas is purged through the instrument at a flow rate of 100 ml per minute, so that the flow distribution is 10% to the balance chamber and 90% to the furnace. The transfer line from the EGA furnace is vented into an extraction hood.

The instrument is calibrated for temperature using samples of alumel wire (PIN 952398.901) and nickel wire (PIN 952385.901) supplied by TA Instruments. The values obtained were 154.16°C for the alumel wire and 368.23°C for the nickel wire. These results are input as Points 1 and 2 respectively in the temperature calibration menu of the instrument along with standard temperatures quoted for various materials in the TA Instruments calibration literature. The instrument is set in TGA 1000°C mode and the data sampling interval set to 2 sec/point.

Platinum pans of 100 $\mu$l capacity for holding the polymer samples are used for all measurements. The pans are cleaned prior to use by heating them to a red heat for a minimum of 5 seconds, or until all combustible material had been removed, using a blow torch. The cleaned pans are always baselined using the instruments Tare function before use to ensure only the weight of the polymer sample is recorded.

A single pellet of a polymer (approximate weight (10 to 20 mg)) that is cylindrical in shape being approximately 3 mm long and 3 mm cross-sectional diameter is placed on a clean platinum pan and loaded into the EGA furnace.

The polymer is heated at a rate of 5°C/minute to a maximum temperature of 600°C. The instrument records the weight of the polymer as function of time. Analysis of a weight versus temperature plot allows derivation of the amount of moisture present in the sample, corresponding to the amount of weight lost when the sample is heated from room temperature to 135°C. The temperature above 135°C at which the polymer loses a further 1% of its weight, corresponds to the thermal degradation temperature of the polymer referred to as Td(1%). In other words, the temperature above 135°C at which the polymer must be heated so that the weight of the polymer as measured at 135°C decreases by 1% by weight due to thermal degradation. Similarly, Td (2%) is the temperature above 135 °C at which the polymer must be heated so that the weight of the polymer as measured at 135 °C decreases by 2% by weight due to thermal degradation. The results are detailed in Table 5.

Table 5

| Sample | Td (1%) | Td (2%) |
|---|---|---|
| Control (PMMA) | 247 | 273 |
| Comparative Example A | 271 | 301 |
| 2 | 249 | 276 |
| 3 | 251 | 277 |
| 4 | 256 | 284 |
| 5 | 268 | 296 |
| 6 | 276 | 305 |
| 7 | 274 | 303 |
| 8 | 268 | 296 |
| 9 | 257 | 310 |
| 10 | 241 | 272 |
| 11 | 252 | 287 |
| 12 | 243 | 271 |

The results demonstrate that the thermal stability of the polymeric compositions of the present invention are generally at least comparable to a methyl methacrylate homopolymer. However, in the majority of cases the polymeric composition of the present invention exhibit increased thermal stability compared to a methyl methacrylate homopolymer. Conveniently, the polymeric compositions of the present invention may be employed in moderate and high temperature applications.

Vicat Softening Temperature

The Vicat Softening Point of the polymers was determined in accordance with ISO 306B : 1987 Second Edition. The results as detailed in Table 6 indicate the polymeric composition of the present invention have comparable softening points as a polymethyl methacrylate homopolymer (PMMA).

Table 6

| Sample | Vicat Softening Point °C |
|---|---|
| PMMA | 114.2 |

(continued)

| Sample | Vicat Softening Point °C |
|---|---|
| Comparative Example A | 112.5 |
| 2 | 115.3 |
| 3 | 114.3 |
| 4 | 113.0 |
| 5 | 110.8 |
| 6 | 109.45 |
| 7 | 103.60 |

Polymer Rheology

The complex viscosity *η(ω) of a polymer was determined using a rotational rheometer as outlined below. Suitably, prior to mounting in the torsional rheometer, solid pre-form disks of the sample polymer are prepared and dried in a vacuum oven overnight at 70°C, to remove residual moisture. They are then mounted in between parallel plates of 25 mm diameter, in a Rheometrics RDAII rotational rheometer.

The upper test fixture is lowered so it touches the bottom fixture at approximately the same normal force it experiences during testing. The gap indicator is then zeroed. The upper test fixture is then raised and the sample disk is placed on to the bottom test fixture.

The plate is gently lowered down onto the surface of the disk, and then heated to a temperature of typically 140°C, whilst maintaining the gap setting for a sample disk of 2mm thickness. Once the polymer disk has visibly melted, the excess polymer sample emerging from the side of the cone and plate is trimmed off, using a sharp knife. Torsional frequencies between 0.01 and 100 rads/s at a fixed strain amplitude of 5% are then applied to the sample by the rheometer at this fixed temperature. During this frequency sweep, the storage (elastic) modulus $G'(\omega)$ and the loss (viscous) modulus $G''(\omega)$ are determined at each frequency.

The temperature of the melt is then increased to a value typically 20-30°C higher than previously, with the experimental procedure being repeated. Measurements were made at 140 °C, 170 °C, 200 °C and 250 °C.

The measurement of the storage and loss moduli allows the calculation of the complex viscosity $\eta^*(\omega)$ using the standard relationship (ref LA Utraki Polymer Alloys and Blends, p134 Hanser Publishers (1990)):-

$$\eta^*(\omega) = \frac{\sqrt{G'^2(\omega) + G''^2(\omega)}}{\omega}$$

[4a]

The storage and loss moduli were then subjected to time temperature superposition to a reference temperature of 230°C using the Shiftt.exe computer program, described conceptually and with source code listing by GV Gordon and MT Shaw Computer Programs for Rheologists, Hanser Publishers (1994).

The resulting 'master curves' were shifted to a reference temperature of 230°C, assuming a glass transition temperature of approximately 100°C, using either tan $\delta$ ($G''(\omega)/G'(\omega)$) or the storage modulus $G'(\omega)$ as the reference spectra to be superposed.

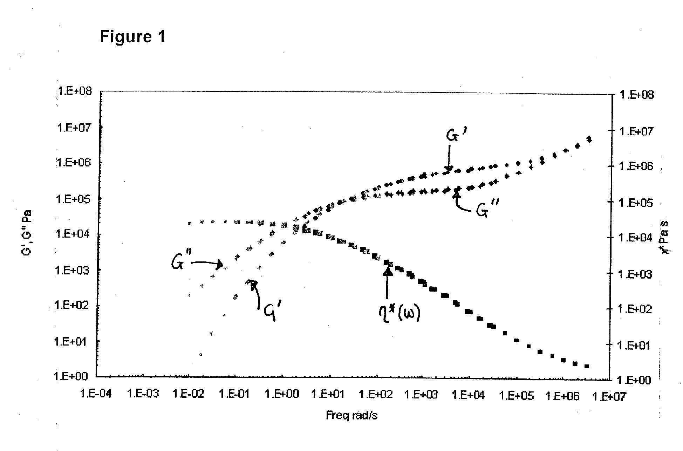

The master curve for an acrylic copolymer comprising 97% by weight methyl methacrylate and 3% by weight ethyl acrylate having a molecular weight of 135 KDa and formed by suspension polymerisation is shown in Figure 1.

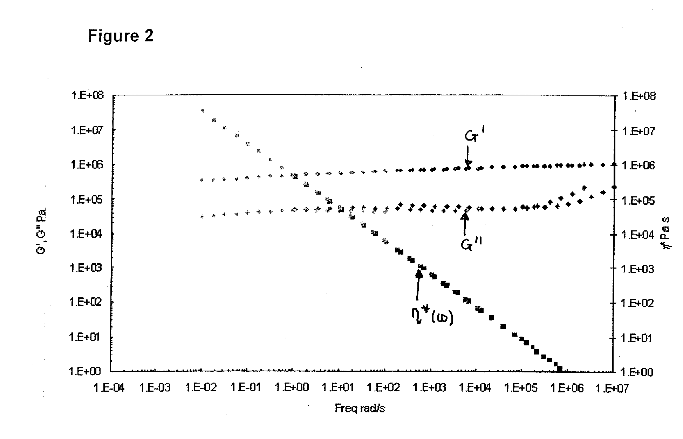

The master curve for an acrylic copolymer formed by polymerising methyl methacrylate and ethyl acrylate (97: 3 w/w) in the presence of HIGHLINK NanO G 130M-31 (4% by weight) comprising a dispersion of 30% by weight colloidal silica having a weight average particle size of 13 nm in isobornyl acrylate by suspension polymerisation in accordance with Example 22 is shown in Figure 2. It was not possible to determine the molecular weight of the polymer by gel permeation chromatography as the polymer was insoluble in chloroform.

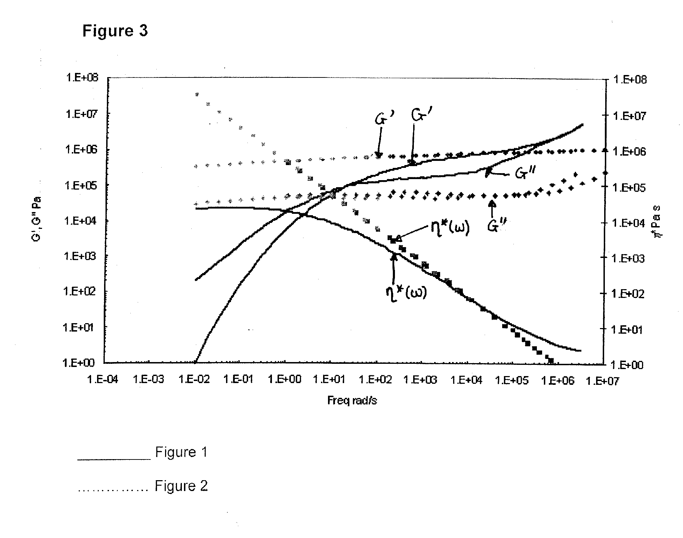

Figure 3 represents an overlay of the master curves of Examples 1 and 2.

It is clear from Figures 1 to 3 that the polymeric composition comprising isobornyl acrylate and colloidal silica exhibits increased shear thinning (namely a larger decrease in the complex viscosity ($\eta^*(\omega)$) compared to the comparable polymeric composition not including the isobornyl acrylate and colloidal silica, particularly over the shear rate range of $10^2 s^{-1}$ to $10^5 s^{-1}$.

Additionally, the polymeric composition comprising isobornyl acrylate and colloidal silica exhibits a substantially lower viscous modulus (G") than a comparable composition not including the isobornyl acrylate and colloidal silica over the shear rate range of $10^2 s^{-1}$ to $10^5 s^{-1}$ typically employed in melt processing applications.

Example 23 - Preparation of an acrylic copolymer polymeric composition by bag polymerisation

Methyl methacrylate (2757 g, 92.5% by wt), is mixed with ethyl acrylate (180 g, 6% by wt), Highlink NanO G 130M-31 a dispersion of 30% by wt colloidal silica having a weight average particle size of 13 nm in isobornyl acrylate (45 g, 1.5% by wt), lauryl peroxide (1.5 g), t-butyl peroxyacetate (1.5 g) and dodecyl mercaptan (15 g). The resulting mixture is degassed, poured into a nylon bag and the open edges of the bag heat sealed to prevent monomer leakage. The bag is placed flat on a metal tray in the bottom of an air circulating oven and heated for 18 hours at 60 °C, then 4 hours at 62 °C, then 2 hours at 95 °C and finally 2 hours at 130 °C to complete the polymerisation reaction. The bag is cooled to room temperature, the polymer removed and crushed for melt processing applications. The resulting copolymer polymeric composition comprising methyl methacrylate/ethyl acrylate/Highlink NanO G 130M-31 (92.5:6:1.5) had a molecular weight of 90 kDa as determined by gel permeation chromatography.

Comparative Example C - Preparation of an acrylic copolymer polymeric composition without colloida silica by bag polymerisation

The procedure of Example 23 was repeated employing methyl methacrylate (2802 g, 94% by wt), ethyl acrylate (180 g, 6% by wt), lauryl peroxide (1.5 g), t-butyl peroxyacetate (1.5 g) and dodecyl mercaptan (15 g) to produce an acrylic copolymer comprising methyl methacrylate/ethyl acrylate (94:6) having a molecular weight of 90 kDa as determined by gel permeation chromatography.

Chemical Resistance Testing

The resistance to environmental stress cracking (ESC) of a polymeric composition is determined in accordance ISO 22088-2:2006(E) (First Edition) employing Method C disclosed therein. A sample of the polymeric composition is produced by an injection moulding procedure and the resulting moulding machined into a type 1 BA small test specimen specified in Annex A of ISO 527-2:1993. Prior to testing, the test specimens are pre-conditioned for 24 hours at 23 °C and 50% relative humidity. During testing the specimen is completely immersed in a styrene solvent at 23 °C and a constant load applied to the specimen. The time taken for the specimen to rupture at a series of applied constant loads is recorded. A minimum of two specimens are tested at each applied constant load and the arithmetic mean of the times to rupture for each stress applied are then calculated.

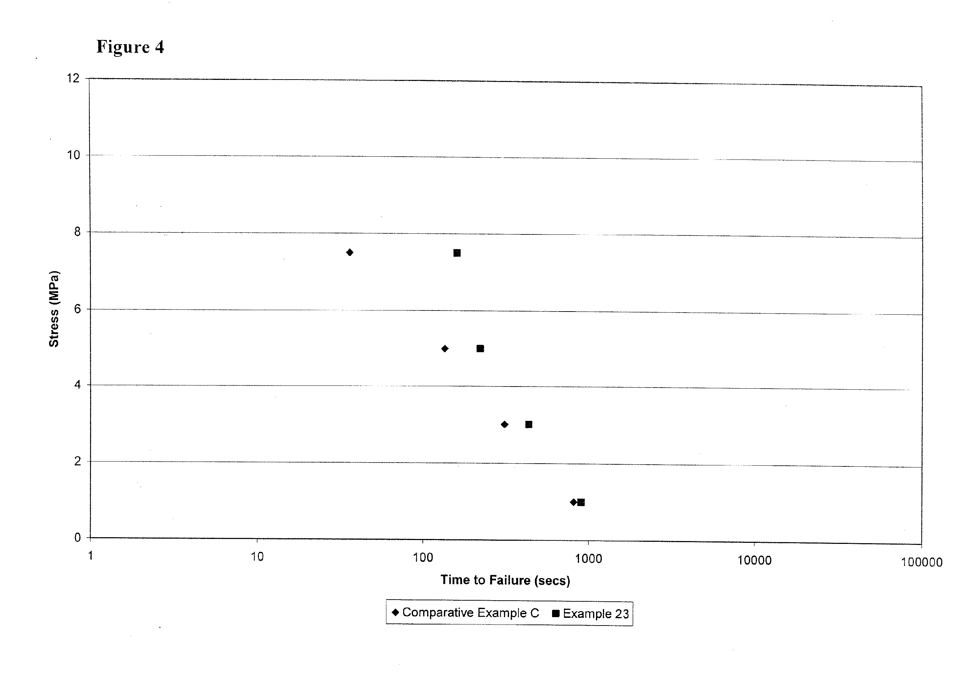

The results for the environmental stress cracking of the polymeric compositions of Example 23 and Comparative Example C are tabulated in Table 7 and depicted in Figure 4.

Table 7

| Applied Stress (MPa) | 1 | 3 | 5 | 7.5 |
|---|---|---|---|---|
| Example 23 Time to rupture (s) | 900 | 433 | 221 | 160 |
| Comparative C Time to rupture (s) | 810 | 310 | 135 | 36 |

As is evident from the results tabulated in Table 7 and depicted in Figure 4, a polymeric composition of the present invention (Example 23) takes longer to rupture at a specific applied constant load than a comparable composition not including inorganic oxide particles (Comparative Example C). Consequently, the polymeric composition of Example 23 exhibits an improved resistance to chemicals than the polymeric composition of Comparative Example C.

**Claims**

1. Use of particles comprising an inorganic oxide having a weight average particle size of less than or equal to 400 nm for reducing melt viscosity in a polymeric composition, the polymeric composition comprising a polymer matrix derived from one or more polymerisable monomers, wherein said polymeric composition is obtainable by polymerising a polymerisable mixture comprising said one or more polymerisable monomers of the polymer matrix in the presence of said particles and a dispersing agent comprising an ethylenically unsaturated compound.

**2.** A method of reducing melt viscosity in a polymeric composition, the method comprising adding particles comprising an inorganic oxide having a weight average particle size of less than or equal to 400nm, the polymeric composition comprising a polymer matrix derived from one or more polymerisable monomers, wherein said polymeric composition is obtainable by polymerising a polymerisable mixture comprising said one or more polymerisable monomers of the polymer matrix in the presence of said particles and a dispersing agent comprising an ethylenically unsaturated compound.

**3.** Use or method as claimed in either of claim 1 or claim 2 wherein the dispersing agent comprises an ester of acrylic acid or an ester of an alkacrylic acid.

**4.** Use or method as claimed in claim 3 wherein the dispersing agent includes one or more (alk)acrylate groups per molecule.

**5.** Use or method as claimed in claim 4 wherein the dispersing agent comprises a $C_1$ to $C_{12}$ alkyl (meth)acrylate.

**6.** Use or method as claimed in claim 4 wherein the dispersing agent comprises a lower alkyl (alk)acrylate, a lower aryl (alk)acrylate, a lower arylalkylenyl (alk)acrylate or a combination thereof.

**7.** Use or method as claimed in any one of the preceding claims wherein the dispersing agent has a different chemical structure than said one or more polymerisable monomers in the polymerisable matrix.

**8.** Use or method as claimed in any one of the preceding claims wherein the dispersing agent is miscible with the polymerisable mixture.

**9.** Use or method as claimed in any one of the preceding claims wherein the dispersing agent is present in an amount of 0.5 to 25% by wt, preferably 2.0 to 10% by wt, of the polymeric composition based on the total weight of the polymeric composition.

**10.** Use or method as claimed in any one of the preceding claims wherein the dispersing agent is hydrophobic and does not include any free polar functional groups.

**11.** Use or method as claimed in any one of the preceding claims wherein the inorganic oxide particles include at least one oxide selected from titanium, zirconium, silicon, zinc and aluminium oxides.

**12.** Use or method as claimed in any one of the preceding claims wherein the inorganic oxide particles have a weight average particle size of between 1 to 80 nm.

**13.** Use or method as claimed in any one of the preceding claims wherein the inorganic oxide particles are present in an amount of 0.1 to 2.5% by wt of the polymeric composition based on the total weight of the polymeric composition.

**14.** Use or method as claimed in any one of the preceding claims wherein the polymeric composition is substantially insoluble in an organic solvent.

**15.** Use or method as claimed in any one of the preceding claims wherein the polymer matrix comprises a polyester, a polystyrene, a polyamide, a polyolefin, a polycarbonate or an acrylic polymer.

**16.** Use or method as claimed in claim 15 wherein the polymer matrix comprises a polymethyl methacrylate homopolymer or an acrylic copolymer obtainable by polymerising a monomer mixture comprising 60 to 100% by wt methyl methacrylate and up to 40% by wt of at least one other copolymerisable comonomers selected from lower alkyl (meth) acrylate comonomers, lower aryl (meth)acrylate comonomers and lower arylalkylenyl (meth)acrylate comonomers.

**17.** Use or method as claimed in claim 16 wherein the polymer matrix comprises an acrylic copolymer obtainable by polymerising a monomer mixture comprising greater than or equal to 80% by wt methyl methacrylate and less than or equal to 20% by wt of at least one other copolymerisable lower alkyl (meth)acrylate comonomer.

**18.** Use or method as claimed in any one of the preceding claims wherein the polymer matrix is present in an amount of greater than or equal to 70% by wt of the polymeric composition based on the total weight of the polymeric composition.

19. Use or method as claimed in any one of the preceding claims wherein the polymeric composition has a weight average molecular weight of greater than or equal to 300,000 Daltons and the inorganic oxide particles are present in an amount of less than or equal to 0.18% by wt based on the total weight of the polymeric composition.

20. Use or method as claimed in any one of the preceding claims wherein the polymeric composition has a weight average molecular weight of between 20,000 Daltons and 250,000 Daltons and the inorganic oxide particles are present in an amount 0.3% by wt to less than 3% by wt based on the total weight of the polymeric composition.

**Figure 1**

Figure 2

Figure 3

_____ Figure 1

............... Figure 2

Figure 4

Europäisches
Patentamt

European
Patent Office

Office européen
des brevets

# EUROPEAN SEARCH REPORT

Application Number

EP 10 15 0356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANONYMOUS: "Innovative and up to date: products and ideas from Clariant" CLARIANT AT THE EUROCOAT 2005, MEDIA RELEASE, [Online] 29 September 2005 (2005-09-29), XP002452543 Retrieved from the Internet: URL:http://pa.clariant.com/pa/e2wtools.nsf /lookupDownloads/2005_08_04.pdf/$File/2005 _08_04.pdf> * page 12 - page 13 * ----- | 1-20 | INV. C09D1/00 |
| Y | ANONYMOUS: CLARIANT, SPECIALTY FINE CHEMICALS: BROCHURE, [Online] 2005, XP002452544 Retrieved from the Internet: URL:http://www.clariant.com/C125691A003596 E5/vwLookupDownloads/Organosols.pdf/$File/ Organosols.pdf> * the whole document * ----- | 1-20 | |
| Y | ANONYMOUS: "Powerful products, optimal service, and innovative ideas" CLARIANT AT THE EUROPEAN COATINGS SHOW 2005, MEDIA RELEASE, [Online] 24 March 2005 (2005-03-24), XP002452545 Retrieved from the Internet: URL:http://www.clariant.com/C1256C70004EEA 54/vwLookupDownloads/2005_03_24.pdf/$File/ 2005_03_24.pdf> * page 11 * -----  -/-- | 1-20 | TECHNICAL FIELDS SEARCHED (IPC) C09D |

The present search report has been drawn up for all claims

| Place of search | Date of completion of the search | Examiner |
|---|---|---|
| Munich | 9 March 2010 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 10 15 0356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANONYMOUS: "New Dimension Materials Functional Coatings & Ceramic Composites" CLARIANT, NEW MATERIALS (04-2007), [Online] XP002452546 Retrieved from the Internet: URL:http://www.clariant.com/C12568C5004FDBD7/vwLookupDownloads/NewMat_neuE_IMP5.pdf/$FILE/NewMat_neuE_IMP5.pdf> * page 29 * ----- | 1-20 | |
| | | | **TECHNICAL FIELDS SEARCHED (IPC)** |

The present search report has been drawn up for all claims

| Place of search | Date of completion of the search | Examiner |
|---|---|---|
| Munich | 9 March 2010 | Rouault, Yannick |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Kirk-Othmer Encyclopaedia of Chemical Technology. John Wiley and Sons, vol. 16, 506-537